# EUROPEAN PATENT APPLICATION

(11) **EP 4 773 690 A1**
(43) Date of publication of application: **08.07.2026**
(21) Application number: 23950156.2
(22) Date of filing: 30.08.2023
(51) Int. Cl.: H04W 60/00

(54) **COMMUNICATION METHOD, TERMINAL, NETWORK DEVICE, AND STORAGE MEDIUM**

(71) Applicant: Beijing Xiaomi Mobile Software Co., Ltd., Beijing 100085 (CN)
(72) Inventor: LI, Mingju, Beijing 100085 (CN)
(74) Representative: Stöckeler, Ferdinand
(86) International application number: PCT/CN2023/115965
(87) International publication number: WO 2025/043568

(57) **Abstract**

The present disclosure relates to a communication method, a terminal, a network device, and a storage medium. The communication method comprises: sending first information to a network device, wherein the first information comprises the performance of an AI function or an AI model, and the AI function or the AI model is deployed at a terminal side. By means of the present disclosure, a network device can activate an AI model more accurately and in a more targeted manner on the basis of a performance requirement of the network device.

## Description

### TECHNICAL FIELD

The disclosure relates to the field of communication technologies, in particular to a communication method, a terminal, a network device and a storage medium.

### BACKGROUND

In related arts, in new radio (NR), especially when communication frequency is in a frequency range 2, due to rapid attenuation of high-frequency channels, beam-based transmission and reception are required to ensure coverage.

In some beam management processes, in order to reduce a number of beams or beam pairs to be measured by a terminal, artificial intelligence (AI) models are used for beam prediction.

### SUMMARY

AI models activated by network devices often exhibit lower accuracy.

The embodiments of the disclosure provide a communication method, a terminal, a network device and a storage medium.

According to a first aspect, the embodiments of the disclosure provide a communication method. The method includes: sending by a terminal first information to a network device, in which the first information includes a performance of an AI functionality or an AI model, and the AI functionality or the AI model is deployed at the terminal side.

According to a second aspect, the embodiments of the disclosure provide a communication method. The method includes: receiving by a network device first information sent by a terminal, in which the first information includes a performance of an AI functionality or an AI model, and the AI functionality or the AI model is deployed at the terminal side.

According to a third aspect, the embodiments of the disclosure provide a communication method. The method includes: sending by a terminal first information to a network device, in which the first information includes a performance of an AI functionality or an AI model, and the AI functionality or the AI model is deployed at the terminal side; and receiving by the network device the first information.

According to a fourth aspect, the embodiments of the disclosure provide a terminal. The terminal includes: a transceiver module, configured to send first information to a network device, in which the first information includes a performance of an AI functionality or an AI model, and the AI functionality or the AI model is deployed at the terminal side.

According to a fifth aspect, the embodiments of the disclosure provide a network device. The network device includes: a transceiver module, configured to receive first information sent by a terminal, in which the first information includes a performance of an AI functionality or an AI model, and the AI functionality or the AI model is deployed at the terminal side.

According to a sixth aspect, the embodiments of the disclosure provide a terminal. The terminal includes: one or more processors, in which the terminal is used for implementing the communication method of the first aspect.

According to a seventh aspect, the embodiments of the disclosure provide a network device. The network device includes: one or more processors, in which the network device is used for implementing the communication method of the second aspect.

According to an eighth aspect, the embodiments of the disclosure provide a communication system, including a terminal and a network device. The terminal is used for implementing the communication method of the first aspect, and the network device is used for implementing the communication method of the second aspect.

According to a ninth aspect, the embodiments of the disclosure provide a storage medium. The storage medium stores instructions, and when the instructions are executed by a communication device, the communication device is caused to implement the communication method of the first aspect or the communication method of the second aspect.

In the disclosure, the terminal sends the first information to the network device to inform the network device of the performance of each AI model, so that the network device can activate the AI model more accurately and pertinently according to a performance requirement.

### BRIEF DESCRIPTION OF THE DRAWINGS

In order to more clearly explain the technical solutions of the embodiments of the disclosure, the accompanying drawings required for the descriptions of the embodiments are introduced below. The following drawings are only some embodiments of the disclosure and do not impose specific limitations on the protection scope of the disclosure.
FIG. 1 is a schematic structural diagram of a communication system illustrated according to an embodiment of the disclosure.
FIG. 2 is an schematic interaction diagram of a communication method illustrated according to an embodiment of the disclosure.
FIG. 3a is a flowchart of a communication method illustrated according to an embodiment of the disclosure.
FIG. 3b is a flowchart of a communication method illustrated according to an embodiment of the disclosure.
FIG. 4a is a flowchart of a communication method illustrated according to an embodiment of the disclosure.
FIG. 4b is a flowchart of a communication method illustrated according to an embodiment of the disclosure.
FIG. 4c is a flowchart of a communication method illustrated according to an embodiment of the disclosure.
FIG. 5 is a flowchart of a communication method illustrated according to an embodiment of the disclosure.
FIG. 6a is a schematic diagram of a terminal illustrated according to an embodiment of the disclosure.
FIG. 6b is a schematic diagram of a network device illustrated according to an embodiment of the disclosure.
FIG. 7a is a schematic diagram of a communication device illustrated according to an embodiment of the disclosure.
FIG. 7b is a schematic structural diagram of a chip illustrated according to an embodiment of the disclosure.

### DETAILED DESCRIPTION

The embodiments of the disclosure provide a communication method, a terminal, a network device and a storage medium.

According to a first aspect, the embodiments of the disclosure provide a communication method. The method includes: sending by a terminal first information to a network device, in which the first information includes a performance of an AI functionality or an AI model, and the AI functionality or the AI model is deployed at the terminal side.

In the above embodiments, the terminal sends the first information to the network device to inform the network device of the performance of each AI model, so that the network device can activate the AI model more accurately and pertinently according to a performance requirement.

In combination with some embodiments of the first aspect, in some embodiments, the first information further includes at least one of the following: an identifier of an AI functionality or an AI model supported by the terminal; or a condition for an AI functionality or an AI model supported by the terminal.

In the above embodiments, the first information further includes an identifier of the AI functionality or the AI model. If the network device has received the performance of each AI functionality or AI model on the terminal side in advance, the first information only needs to include the identifier of the AI functionality or the AI model, which saves resources. The first information may also include a condition for the AI functionality or the AI model, so that the network device can activate or deactivate an appropriate AI functionality or AI model.

In combination with some embodiments of the first aspect, in some embodiments, the condition includes at least one of: a number of beams or beam pairs in a first beam set, in which a measurement value of the first beam set is used as an input to the AI model; a beam pattern of a beam or beam pair in a first beam set; a number of beams or beam pairs in a second beam set, in which an output of the AI model is used to obtain beam information in the second beam set; a beam pattern of a beam or beam pair in a second beam set; a relationship between a first beam set and a second beam set; a content input to the AI model; a content output from the AI model; monitoring information on the performance of the AI functionality or the AI model; an applicable deployment scenario; a beam codebook for an applicable network device; a beam codebook for an applicable terminal; distribution information of an applicable terminal; a number of measurement instances input to the AI model; a number of prediction instances output from the AI model; or a moving speed of an applicable terminal.

In the above embodiments, the network device may better manage the AI functionality or AI model by using various conditions to accurately activate or deactivate a AI functionality or AI model more suitable and more accurate while improving the efficiency.

In combination with some embodiments of the first aspect, in some embodiments, the first information includes at least one of: capability information indicating an AI functionality and/or an AI model supported by the terminal; or certification information indicating a certification of the AI functionality and/or the AI model.

In the above embodiments, the first information includes the capability information, which means that the first information is sent when the terminal sends the capability information. The first information may include the certification information. When the terminal performs a certification on an AI functionality and/or an AI models, it sends the first information. Thus, resources are saved by sending the first information to the network device.

In combination with some embodiments of the first aspect, in some embodiments, the performance includes at least one of the following types: a beam or beam pair prediction accuracy; a beam or beam pair prediction accuracy under a layer 1 reference signal received power (L1-RSRP) difference being within a first threshold, in which the L1-RSRP difference is a difference between a measured L1-RSRP of a predicted best beam or beam pair and a measured L1-RSRP of a measured best beam or beam pair; an L1-RSRP differential metric, in which the L1-RSRP differential metric is a differential metric between a measured L1-RSRP of a predicted best beam or beam pair and a measured L1-RSRP of a measured best beam or beam pair, the L1-RSRP differential metric comprises at least one of: an average value of L 1-RSRP differences, an accumulative distribution function of L1-RSRP differences, a ratio of L1-RSRP differences being less than or equal to a second threshold or a ratio of L1-RSRP differences being greater than a third threshold, and the L1-RSRP difference is a difference between the measured L1-RSRP of the predicted best beam or beam pair and the measured L1-RSRP of the measured best beam or beam pair; a predicted L1-RSRP differential metric, in which the predicted L1-RSRP differential metric is a differential metric between a predicted L1-RSRP of a predicted best beam or beam pair and a measured L1-RSRP of the best predicted beam or beam pair; the predicted L1-RSRP differential metric comprises at least one of: an average value of predicted L1-RSRP differences, an accumulative distribution function of predicted L1-RSRP differences, a ratio of predicted L1-RSRP differences being less than or equal to a fourth threshold or a ratio of predicted L1-RSRP differences being greater than a fifth threshold, and a predicted L1-RSRP difference is a difference between the predicted L1-RSRP of the predicted best beam or beam pair and the measured L1-RSRP of the predicted best beam or beam pair; a throughput of the terminal; a reference signal overhead; an uplink control information overhead; or a prediction delay.

In the above embodiments, the performance of the AI functionality or AI model included in the first information includes may be at least one of the above, enabling the network device to rapidly determine which AI functionality or AI model to activate or deactivate, thereby improving efficiency. This also enables network devices to determine which AI features or AI models are more appropriate and accurate to activate or deactivate.

In combination with some embodiments of the first aspect, in some embodiments, in response to performing a certification of the AI functionality and/or the AI model, the terminal sends the first information to the network device.

In the above embodiments, when the terminal performs a certification on an AI functionality and/or an AI models, it sends the first information. Through the above implementation, resources are saved by sending the first information to the network device.

In combination with some embodiments of the first aspect, in some embodiments, in response to performing the certification of the AI functionality, the performance of the AI functionality includes at least one of: one or more performance values; or a range of a performance value.

In the above embodiments, each AI functionality may correspond to one or more AI models, and the performance of the AI functionality is determined based on functions of corresponding AI models, thus enabling the network device to determine an AI functionality to be activated or deactivated more accurately and efficiently.

In combination with some embodiments of the first aspect, in some embodiments, the AI functionality includes a plurality of AI models, a performance value is a first performance value among performance values corresponding to the plurality of AI models, and the first performance value is a maximum value or a minimum value.

In the above embodiments, the maximum value or the minimum value is selected from the performance values corresponding to the plurality of AI models of the AI functionality as the performance value of the AI functionality, so that the network device can more accurately and efficiently determine the AI functionality to be activated or deactivated.

In combination with some embodiments of the first aspect, in some embodiments, the AI functionality includes a plurality of AI models, a plurality of performance values are respective performance values corresponding to the plurality of AI models.

In the above embodiments, the respective performance values corresponding to the plurality of AI models of the AI functionality are sent to the network device, so that the network device can more accurately determine the AI functionality to be activated or deactivated.

In combination with some embodiments of the first aspect, in some embodiments, the AI functionality includes a plurality of AI models, the range of the performance value is a range of performance values corresponding to the plurality of AI models.

In the above embodiments, the range of the performance value is sent to the network device, so that the network device only needs to judge whether a performance value of an AI functionality or AI model to be activated is within the range of the performance value when selecting the AI functionality or AI model to be activated, which is more efficient.

In combination with some embodiments of the first aspect, in some embodiments, the performance of the AI functionality or AI model satisfies at least one of: the AI functionality or the AI model is used for spatial domain beam prediction, and each of different types of performance corresponds to a performance value; or the AI functionality or the AI model is used for time domain beam prediction, and each of different types of performance corresponds to one or more performance values including performance values corresponding to each prediction instance.

In the above embodiments, different performance values are sent depending on different situations. Different performance values corresponding to different prediction instances for the AI functionality and/or AI model are sent, thus improving the communication efficiency.

According to a second aspect, the embodiments of the disclosure provide a communication method. The method includes: a network device receiving first information sent by a terminal, in which the first information includes a performance of an AI functionality or AI model, and the AI functionality or AI model is deployed at the terminal side.

In combination with some embodiments of the second aspect, in some embodiments, the first information further includes at least one of: an identifier of an AI functionality or an AI model supported by the terminal; or a condition for an AI functionality or an AI model supported by the terminal.

In combination with some embodiments of the second aspect, in some embodiments, the condition includes at least one of: a number of beams or beam pairs in a first beam set, in which a measurement value of the first beam set is used as an input to the AI model; a beam pattern of a beam or beam pair in a first beam set; a number of beams or beam pairs in a second beam set, in which an output of the AI model is used to obtain beam information in the second beam set; a beam pattern of a beam or beam pair in a second beam set; a relationship between a first beam set and a second beam set; a content input to the AI model; a content output from the AI model; monitoring information on the performance of the AI functionality or the AI model; an applicable deployment scenario; a beam codebook for an applicable network device; a beam codebook for an applicable terminal; distribution information of an applicable terminal; a number of measurement instances input to the AI model; a number of prediction instances output from the AI model; or a moving speed of an applicable terminal.

In combination with some embodiments of the second aspect, in some embodiments, the first information includes at least one of the following: capability information indicating an AI functionality and/or an AI model supported by the terminal; or certification information indicating a certification of the AI functionality and/or the AI model.

In combination with some embodiments of the second aspect, in some embodiments, the performance includes at least one of the following types: a beam or beam pair prediction accuracy; a beam or beam pair prediction accuracy under a layer 1 reference signal received power (L1-RSRP) difference being within a first threshold, in which the L1-RSRP difference is a difference between a measured L1-RSRP of a predicted best beam or beam pair and a measured L1-RSRP of a measured best beam or beam pair; an L1-RSRP differential metric, in which the L1-RSRP differential metric is a differential metric between a measured L1-RSRP of a predicted best beam or beam pair and a measured L1-RSRP of a measured best beam or beam pair, the L1-RSRP differential metric comprises at least one of: an average value of L1-RSRP differences, an accumulative distribution function of L1-RSRP differences, a ratio of L1-RSRP differences being less than or equal to a second threshold or a ratio of L1-RSRP differences being greater than a third threshold, and the L1-RSRP difference is a difference between the measured L1-RSRP of the predicted best beam or beam pair and the measured L1-RSRP of the measured best beam or beam pair; a predicted L1-RSRP differential metric, in which the predicted L1-RSRP differential metric is a differential metric between a predicted L1-RSRP of a predicted best beam or beam pair and a measured L1-RSRP of the best predicted beam or beam pair; the predicted L1-RSRP differential metric comprises at least one of: an average value of predicted L1-RSRP differences, an accumulative distribution function of predicted L1-RSRP differences, a ratio of predicted L1-RSRP differences being less than or equal to a fourth threshold or a ratio of predicted L1-RSRP differences being greater than a fifth threshold, and a predicted L1-RSRP difference is a difference between the predicted L1-RSRP of the predicted best beam or beam pair and the measured L1-RSRP of the predicted best beam or beam pair; a throughput of the terminal; a reference signal overhead; an uplink control information overhead; or a prediction delay.

In combination with some embodiments of the second aspect, in some embodiments, in response to performing a certification of the AI functionality and/or the AI model, the network device receives the first information sent by the terminal.

In combination with some embodiments of the second aspect, in some embodiments, in response to performing the certification of the AI functionality, the performance of the AI functionality includes at least one of: one or more performance values; or a range of a performance value.

In combination with some embodiments of the second aspect, in some embodiments, the AI functionality includes a plurality of AI models, a performance value is a first performance value among performance values corresponding to the plurality of AI models, and the first performance value is a maximum value or a minimum value.

In combination with some embodiments of the second aspect, in some embodiments, the AI functionality includes a plurality of AI models, a plurality of performance values are respective performance values corresponding to the plurality of AI models.

In combination with some embodiments of the second aspect, in some embodiments, the AI functionality includes a plurality of AI models, the range of the performance value is a range of performance values corresponding to the plurality of AI models.

In combination with some embodiments of the second aspect, in some embodiments, the performance includes different types of performance, the performance of the AI functionality or AI model satisfies at least one of: the AI functionality or AI model is used for spatial domain prediction, and each of the different types of performance corresponds to a performance value; or the AI functionality or AI model is used for time domain beam prediction, and each of different types of performance corresponds to one or more performance values including performance values corresponding to each prediction instance.

According to a third aspect, the embodiments of the disclosure provide a communication method. The method includes: sending by a terminal first information to a network device, in which the first information includes a performance of an AI functionality or AI model, and the AI functionality or AI model is deployed at the terminal side; and the network device receiving the first information.

According to a fourth aspect, the embodiments of the disclosure provide a terminal. The terminal includes: a transceiver module, configured to send first information to a network device, in which the first information includes a performance of an AI functionality or AI model, and the AI functionality or AI model is deployed at the terminal side.

According to a fifth aspect, the embodiments of the disclosure provide a network device. The network device includes: a transceiver module, configured to receive first information sent by a terminal, in which the first information includes a performance of an AI functionality or AI model, and the AI functionality or AI model is deployed at the terminal side.

According to a sixth aspect, the embodiments of the disclosure provide a terminal. The terminal includes: one or more processors, in which the terminal is used for implementing the communication method of the first aspect.

According to a seventh aspect, the embodiments of the disclosure provide a network device. The network device includes: one or more processors, in which the network device is used for implementing the communication method of the second aspect.

According to an eighth aspect, the embodiments of the disclosure provide a communication system, including a terminal and a network device. The terminal is used for implementing the communication method of the first aspect, and the network device is used for implementing the communication method of the second aspect.

According to a ninth aspect, the embodiments of the disclosure provide a storage medium. The storage medium stores instructions, and when the instructions are executed by a communication device, the communication device is caused to implement the communication method of the first aspect or the communication method of the second aspect.

According to a tenth aspect, the embodiments of the disclosure provide a program product. When the program product is executed by a communication device, the communication device is caused to implement the method described in the optional implementations of the first aspect or the method described in the optional implementations of the second aspect.

According to an eleventh aspect, the embodiments of the disclosure provide a computer program. When the computer program is executed by a computer, the computer is caused to implement the method described in the optional implementations of the first aspect or the method described in the optional implementations of the second aspect.

According to a twelfth aspect, the embodiments of the disclosure provide a chip/chip system. The chip/chip system includes a processing circuit, and is configured to implement the method described in the optional implementations of the first aspect or the method described in the optional implementations of the second aspect.

It is understood that the terminal, an access network device, a first network element, other network elements, a core network device, the communication system, the storage medium, the program product, the computer program, the chip/chip system are all used for implementing the methods provided by the embodiments of the disclosure. The beneficial effects they achieve can refer to the beneficial effects in the corresponding methods, which will not be repeated here.

The embodiments of the disclosure provide a communication method, an apparatus, a device and a storage medium. In some embodiments, terms "information processing method" and "communication method" are interchangeable, and terms "communication device" and "information processing device" are interchangeable. Moreover, terms "information processing system" and "communication system" are interchangeable.

Not all of the embodiments of the disclosure are provided in the disclosure, only some embodiments are illustrated below and they are not taken as specific limitations on the protection scope of the disclosure. Without contradiction, in an embodiment, each step may be implemented as an independent embodiment, and steps may be combined arbitrarily. For example, any solution after removing some steps in the embodiment may also be implemented as an independent embodiment. The steps in the embodiment may be performed in different orders, and optional implementations of the embodiment may be combined arbitrarily. In addition, the embodiments of the disclosure may also be combined arbitrarily. For example, some or all of the steps of different embodiments may be combined arbitrarily, and each embodiment may be arbitrarily combined with optional implementations of other embodiments.

In the embodiments of the disclosure, unless there are special explanations and logical conflicts, terms and/or descriptions of the embodiments are consistent and can refer to each other, and technical features in different embodiments may be combined as a new embodiment according to their inherent logical relations.

Terms used in the embodiments of the disclosure are only for the purpose of describing specific embodiments, and are not considered as limitations of the disclosure.

In the embodiments of the disclosure, unless otherwise specified, an element expressed in a singular form through "a", "an" "the" "the above", "said", "the above described" or "this", is interpreted as that there is "one and only one", "one or more" or "at least one" of the element. For example, when an article, e.g., "a", "an" or "the" in English, is used in translation, a noun after the article can be interpreted in a singular form or in a plural form.

In the embodiments of the disclosure, "a plurality of" refers to "two or more".

In some embodiments, terms "at least one of", "one or more", "a plurality of" and "multiple" are interchangeable.

In some embodiments, descriptions such as "at least one of A or B", "A and/or B", "in one case A, while in another case B", and "in response to one case A, while in response to another case B" may be used in the following technical solutions depending on the specific condition: in some embodiments, A is executed independent of B; in some embodiments, B is executed independent of A; in some embodiments, A and B are selectively executed; and in some embodiments, A and B are both executed. The same applies when there are more branches such as A, B and C.

In some embodiments, "A or B" may be used in the following technical solutions depending on the condition: in some embodiments, A is executed independent of B; in some embodiments, B is executed independent of A; and in some embodiments, A and B are selectively executed. The same applies when there are more branches such as A, B and C.

The prefixes such as "first" and "second" in the embodiments of the disclosure are used only for distinguishing different objects. The prefix is not intended to limit the position, order, priority, quantity or content of a certain object. The description of the object can refer to related contexts in the descriptions of the claims and the embodiments, and should not constitute unnecessary limitations because of the use of prefix. For example, when describing a "field", the prefixes "first" and "second" in "first field" and "second field" do not indicate the positions or orders of the two fields or whether the "first field" and "second field" are in the same message or not, nor do they define the sequence of the "first field" and "second field". For another example, when describing a "level", the prefixes "first" and "second" in "first level" and "second level" do not limit the priorities of the levels. Moreover, an ordinal number used to describe an object does not limit a quantity of the object, and it is possible that there are one or more of such object. Taking "first device" as an example, there may be one or more "first devices". In addition, objects with different prefixes may refer to the same object or different objects. For example, when describing a "device", "first device" and "second device" may refer to the same device or different devices, or may refer to the same device type or different device types. When describing "information", "first information" and "second information" may refer to the same information or different information, or may refer to the same content or different contents.

In some embodiments, "comprising A", "containing A", "used to indicate A" and "carrying A" may be interpreted as "directly carrying A" or "indirectly indicating A".

In some embodiments, terms "in response to", "in response to determining", "in the case of", "when", "while", "if" and "assuming that" are interchangeable.

In some embodiments, terms "greater than", "greater than or equal to", "more than" "more than or equal to", "higher than", "higher than or equal to", "no less than", "no lower than" and "above" are interchangeable. Moreover, terms "less than", "less than or equal to", "lower than", "lower than or equal to", "smaller than", "smaller than or equal to", "no greater than", "no higher than" and "below" are interchangeable.

In some embodiments, the device/apparatus may be interpreted as physical or virtual, and its name is not limited to those listed in the embodiments. It may also be referred to as "equipment", "device", "circuit", "network element", "node", "function", "unit", "section", "system", "network", "chip", "chip system", "entity" and "object" when appropriate.

In some embodiments, "network" may be interpreted as a device included in the network, such as an access network device and a core network device.

In some embodiments, "access network (AN) device" may also be referred to as "radio access network (RAN) device", "base station (BS)", "radio BS" or "fixed station". In some embodiments, it may also be understood as "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier" or "bandwidth part (BWP)".

In some embodiments, "terminal" or "terminal device" may also be referred to as "UE", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client" or "client".

In some embodiments, data and information are obtained by means comply with the laws and regulations of the host country.

In some embodiments, data and information are obtained with the consent of users.

In addition, each element, row or column in the tables of the embodiments of the disclosure may be implemented as an independent embodiment, or any combination of elements, rows and columns may be implemented as an independent embodiment.

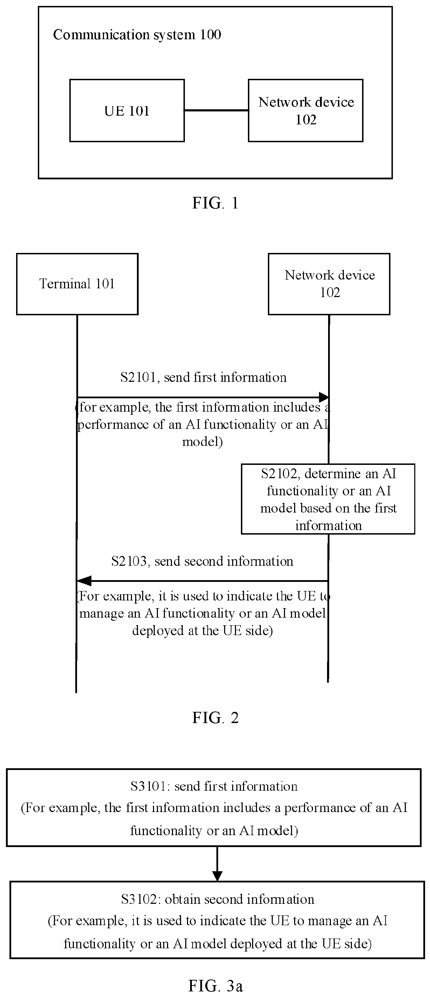

FIG. 1 is a schematic structural diagram of a communication system illustrated according to an embodiment of the disclosure.

As illustrated in FIG. 1, the communication system 100 includes a terminal 101 and a network device 102.

In some embodiments, the terminal 101 includes at least one of a mobile phone, a wearable device, an Internet of Things (IoT) device, a car with communication functions, a smart car, a Pad, a computer with wireless transceiver functions, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city or a wireless terminal in smart home, which is not limited herein.

In some embodiments, the network device 102 includes at least one of an AN device or a core network device.

In some embodiments, the AN device may be a node or a device that connects the terminal to a wireless network. The AN device includes at least one of an evolved Node B (eNB) in a 5th generation (5G) mobile communication system, a next generation eNB (ng-eNB), a next generation NodeB (gNB), a node B (NB), a home NB (HNB), a home eNB (HeNB), a wireless backhaul equipment, a radio network controller (RNC), a BS controller (BSC), a base transceiver station (BTS), a base band unit (BBU), a mobile switching center, a BS in a 6th generation (6G) mobile communication system, an Open RAN, a Cloud RAN, a BS in other communication systems, or an access node in a wireless fidelity (Wi-Fi) system, which is not limited here.

In some embodiments, the technical solution of the disclosure is applied to the Open RAN. In this case, interfaces between AN devices or interfaces within an AN device involved in the embodiments of the disclosure may be used as internal interfaces of the Open RAN. The procedures and information interactions between these internal interfaces are implemented by software or programs.

In some embodiments, the AN device is composed of a central unit (CU) and distributed units (DUs), and "CU" may also be the abbreviation of control unit. The use of CU-DU structure allows to divide a protocol layer of the AN device, such that some functions of the protocol layer are placed in the CU for centralized control, and some or all of the remaining functions of the protocol layer are distributed in the DUs that are centrally controlled by the CU, which is not limited here.

In some embodiments, the core network device may be a device, including one or more network elements, or a plurality of devices or groups of devices, each including some or all of the one or more network elements. The network element may be virtual or physical. The core network includes at least one of an evolved packet core (EPC), a 5G core network (CN) or a next generation core (NGC).

It is understandable that to clearly illustrate the technical solution of the embodiments of the disclosure, its applicable communication system is introduced first in the embodiments of the disclosure, which does not constitute as a limitation on the technical solution provided by the embodiments of the disclosure. Those skilled in the art understand that as system architectures evolve and new business scenarios emerge, the technical solution provided by the embodiments of the disclosure is also applicable to similar technical problems.

The following embodiments of the disclosure are applied to the entire or a portion of the communication system 100 shown in FIG. 1, which is not limited herein. The entities shown in FIG. 1 are examples. The communication system may include all or part of the entities in FIG. 1, and may also include entities not shown in FIG. 1. The quantity and form of each entity are arbitrary, and these entities can be physical or virtual. The connection relationships between these entities are illustrated as examples. For example, the entities may or may not be connected, and the entities may be connected by any means, e.g., directly or indirectly, or in a wired manner or wirelessly.

The embodiments of the disclosure may be applied to long-term evolution (LTE), LTE-Advanced (LTE-A), LTE-Beyond (LTE-B), SUPER 3G, IMT-Advanced, 4th generation (4G) mobile communication system, 5G, 5G NR, future radio access (FRA), new-radio access technology (RAT), NR, new radio access (NX), future generation radio access (FX), global system for mobile communications (GSM (registered trademark)), CDMA2000, ultra mobile broadband (UMB), IEEE 802.11(Wi-Fi (registered trademark)), IEEE 802.16 (WiMAX (registered trademark)), IEEE 802.20, ultra-wideband (UWB), Bluetooth (registered trademark), public land mobile network (PLMN), Device-to-Device (D2D) system, Machine to Machine (M2M) system, IoT system, Vehicle-to-Everything (V2X) system, systems using other communication methods or their next generation systems. In addition, the above systems may be combined for applications, such as a combination of LTE/LTE-A and 5G.

In the embodiments of the disclosure, in related arts, in NR, especially when communication frequency is in a frequency range 2, due to rapid attenuation of high-frequency channels, beam-based transmission and reception are required to ensure coverage.

In some legacy beam management processes, the network device is used to configure a set of reference signal resources for beam measurement. The terminal measures the reference signal resources in the reference signal resource set, and reports identities (IDs) of some relatively strong reference signal resources and their corresponding L1-RSRPs and/or Layer 1 signal to interference plus noise ratios (L1-SINRs) to the network device.

In related arts, it is assumed that the reference signal resource set configured by the network device includes X reference signals, and each reference signal corresponds to a different sending beam of the network device. For each reference signal, the terminal needs to use all the receiving beams to measure the reference signal, to obtain respective beam measurement qualities corresponding to all the receiving beams. In some cases, one or more best beam measurement qualities and/or beam IDs corresponding to the best beam measurement qualities are determined. Therefore, a number of beam pairs that the terminal needs to measure is G*H, where G represents a number of sending beams of the network device and H represents a number of receiving beams of the terminal.

In some embodiments, an implementation process of AI model and/or AI functionality for beam prediction is provided. The AI functionality may be considered as one or more AI models that can achieve the same functions and usages.

In some embodiments, the AI model for beam prediction may be referred to as beam prediction model. Certainly, it may also be called beam prediction AI model, prediction AI model, prediction beam model, etc. The name of this type of AI model is not limited in the disclosure.

In some implementations, when the beam prediction model is spatial domain prediction, the terminal measures an L1-RSRP of a set B and inputs L1-RSRP into the beam prediction model, so that the beam prediction model may predict an L1-RSRP of a best beam and/or beam pair in a set A, and/or an ID of the best beam and/or beam pair in the set A.

The relationship between the set B and the set A includes the following two types.

The first relationship is that the set B is a subset of the set A. For example, the set A contains 32 reference signal resources (each reference signal resource corresponds to a beam direction), and the set B contains a part of the resources, for example, the set B contains 8 reference signal resources out of the 32 reference signal resources.

The second relationship is that the set B is a wide beam, and the set A is a narrow beam. For example, the set A contains 32 reference signal resources (each reference signal resource corresponds to a beam direction, with the 32 reference signal resources covering a 120-degree range of directions). The set B contains further Y reference signal resources, e.g., Y=8. The Y reference signal resources also cover the 120-degree range of directions, that is, the beam direction of each reference signal resource in the set B covers the beam directions of multiple reference signal resources in the set A. It is understood that 32/Y reference signal resources in the set A and one reference signal resource in the set B are in a quasi co-location (QCL) Type D relationship.

It is understood that in the above first relationship and the second relationship are described by taking the sending beams as examples. For a beam pair including both the sending beam and the receiving beam, the receiving beam of the terminal should also be considered. For example, there are 32 sending beams and 4 receiving beams, so the set A contains 32*4 beam pairs, while the set B would be any subset such as 32 beam pairs, 16 beam pairs or the like.

In some embodiments, if monitoring the performance of the beam prediction model is unnecessary, assuming that the AI model has been pre-trained, the network device need only to periodically send a reference signal on the reference signal resource of the set B (e.g., the first cycle). Then the terminal measures an L1-RSRP of the reference signal on the reference signal resource in the set B and inputs it to the beam prediction model, so that the model may output a L1-RSRP corresponding to the reference signal resource of the set A or one or more strongest reference signal resource IDs among the 32 reference signal resources in the set A.

In some embodiments, if monitoring the performance of the beam prediction model is required, the network device must periodically send the reference signal on the reference signal resource in the set A (e.g., the second cycle). Then the terminal needs to measure the L1-RSRP of the reference signal on the reference signal resource in the set B. For the model at the terminal side, the terminal inputs the measured L1-RSRP of the reference signal on the reference signal resource of the set B to the beam prediction model to obtain predicted beam information and reports it to the network device. For the model at the network device side, the terminal reports the measured L1-RSRP of the reference signal on the reference signal resource in the set B and/or its corresponding ID to the network device. The network device inputs the measured L1-RSRP of the reference signal on the reference signal resource in the set B and/or the corresponding ID to the beam prediction model to obtain the predicted beam information. Meanwhile, the terminal measures the L1-RSRPs of the reference signal on all the reference signal resources in the set A, and reports the measured L1-RSRPs and/or corresponding IDs of all the reference signal on the reference signal resources in the set A, and/or L1-RSRPs of L best beams/beam pairs and/or corresponding IDs to the BS as beam information obtained by the traditional method.

In the embodiments of the disclosure, "model at the terminal side" and "AI model deployed at the terminal" are interchangeable, and "model at the network device side" and "AI model deployed at the network device side" are interchangeable.

In some implementations, where the beam prediction model employs a time domain prediction, the terminal measures the L1-RSRP for a historical time set B and input this to the beam prediction model to predict a L1-RSRP for a future time set A. In addition to the above two relationships, there is a further relationship between the set B and the set A, which is that the set B is identical to the set A.

For beam measurement methods in the related arts, the reference signal for future time must also be sent by the BS. The terminal measures these future reference signal and reports obtained beam information to the network device. That is, the terminal needs to measure and report the beam information for all beams and/or beam pairs in the set A to the network device.

In some related arts, AI model is used for beam prediction to reduce the number of beam pairs measured by the terminal. For example, where the terminal would ordinarily need to measure G*H beam pairs, beam prediction using an AI model allows the terminal to measure only a subset of these G*H beam pairs for spatial domain beam prediction, such as 1/8 or 1/4 of the G*H beam pairs. Then, the terminal inputs measured beam measurement qualities of these beam pairs to the AI model to obtain beam information of the G*H beam pairs. For time domain beam prediction, the terminal may measure the beam measurement quality of beam pairs at a historical time point to predict beam information of the beam pairs at a future time point.

For certain AI models' input and output, it may be possible to disregard the beam quality or beam ID of the beam pair, considering only the beam quality or beam ID of the downlink transmission beam. That is, the AI model may be based on the downlink beam rather than the beam pair, which is not limited by the disclosure.

It is understood that the AI model has a certain life cycle or a certain scope of application. For example, some AI models are suitable for suburbs, some AI models are suitable for urban areas, and some AI models are suitable for indoor and other specific environments. For another example, some AI models are suitable for morning and evening rush hours, and some AI models are suitable for specific time periods, e.g., when there are few people at work. Moreover, some AI models are suitable for specific environments at specific times, e.g., roads when there are many people at work. Therefore, it is necessary to monitor the performance of AI model in real time. When the performance of the AI model fails to meet a corresponding requirement, it is necessary to update or switch the AI model in time.

In some embodiments, different AI models also correspond to different performance. For example, when an AI model is used for spatial domain beam prediction, and the set B is a subset of the set A, if the set B contains a different number of beams or beam pairs, the accuracy of beam information predicted by the AI model for the set A differs accordingly. For another example, when the AI model is used for time domain beam prediction, the accuracy of the beam information output from the AI model will also vary if the number of historical measurement times input differs, or if the number of future time points output differs.

For different AI models, how to enable the network device to accurately activate models with different performances according to demand is a problem currently under research.

FIG. 2 is an schematic interaction diagram of a communication method illustrated according to an embodiment of the disclosure. As illustrated in FIG. 2, an embodiment of the disclosure involves in a communication method. The method is applied to the communication system 100, and includes the following steps.

At step S2101, the terminal 101 sends first information to the network device 102.

In some embodiments, the network device 102 receives the first information sent by the terminal 101.

In some embodiments, terms "send", "launch", "report", "issue", "transmit", "two-way transmit" and "send and/or receive" are interchangeable.

In some embodiments, terms "acquire", "obtain", "gain", "receive", "transmit", "two-way transmit" and "transmit and/or receive" are interchangeable. These terms can be interpreted as "receiving from other objects", "obtaining from protocols", "obtaining from upper layers", "processing by itself", "implementing automatically" and so on.

In some embodiments, the name of "information" is not limited to those listed in the embodiments. Terms "information", "message", "signal", "signaling", "report", "configuration", "indication", "instruction", "command", "channel" and "parameter" are interchangeable.

In some embodiments, the first information includes a performance of an AI functionality or an AI model. The AI functionality or the AI model is deployed at the terminal side. An AI functionality corresponds to one or more AI models.

In some embodiments, the performance of the AI functionality is determined based on performance of the one or more AI models corresponding to the AI functionality. For example, if the AI functionality corresponds to a plurality of AI models, the performance of the AI functionality may be the maximum, minimum or average value of performance s of the plurality of AI models or a value at a specified rank. For another example, the performance of the AI functionality may be a range of a performance value composed of performances of the plurality of AI models corresponding to the AI functionality.

In some embodiments, the network device determines the AI functionality or AI model based on the received first information, and indicate the terminal to activate or deactivate the AI functionality or AI model.

In some embodiments, the performance of the AI functionality or AI model includes different types of performance.

The disclosure illustrates the performance of the AI functionality or AI model by taking the AI functionality or AI model for beam prediction as an example, but the usage of the AI functionality or AI model is not limited to beam prediction. For example, it can also be used for channel state information (CSI) compression, CSI prediction, positioning and so on, which will not be limited in the disclosure.

Different types of performance may also be referred to as different dimensions of performance. The performance includes at least one of the following types: a beam or beam pair prediction accuracy; a beam or beam pair prediction accuracy under a L1-RSRP difference being within a first threshold, in which the L1-RSRP difference is a difference between a measured L1-RSRP of a predicted best beam or beam pair and a measured L1-RSRP of a measured best beam or beam pair; an L1-RSRP differential metric, in which the L1-RSRP differential metric is a differential metric between a measured L1-RSRP of a predicted best beam or beam pair and a measured L1-RSRP of a measured best beam or beam pair, the L1-RSRP differential metric includes at least one of: an average value of L1-RSRP differences, an accumulative distribution function of L1-RSRP differences, a ratio of L1-RSRP differences being less than or equal to a second threshold or a ratio of L1-RSRP differences being greater than a third threshold, and the L1-RSRP difference is a difference between the measured L1-RSRP of the predicted best beam or beam pair and the measured L1-RSRP of the measured best beam or beam pair; a predicted L 1-RSRP differential metric, in which the predicted L1-RSRP differential metric is a differential metric between a predicted L1-RSRP of a predicted best beam or beam pair and a measured L1-RSRP of the predicted best beam or beam pair, the predicted L1-RSRP differential metric includes at least one of: an average value of predicted L1-RSRP differences, an accumulative distribution function of predicted L1-RSRP differences, a ratio of predicted L1-RSRP differences being less than or equal to a fourth threshold or a ratio of predicted L1-RSRP differences being greater than a fifth threshold, and the predicted L1-RSRP difference is a difference between the predicted L1-RSRP of the predicted best beam or beam pair and the measured L1-RSRP of the predicted best beam or beam pair; a throughput of the terminal; a reference signal overhead; an uplink control information overhead; or a prediction delay.

In some embodiments, terms "upward", "uplink" and "physical uplink" are interchangeable. Moreover, terms "downward", "downlink" and "physical downlink" are interchangeable. In addition, terms "side", "sidelink", "side traffic", "sidelink traffic", "direct", "direct link", "direct traffic" and "direct link traffic" are also interchangeable.

In some embodiments, terms "downlink control information (DCI)", "downlink (DL) assignment", "DL DCI", "uplink (UL) grant" and "UL DCI" are interchangeable.

In some embodiments, the performance of the AI functionality or AI model includes a beam or beam pair prediction accuracy.

For example, when the AI model is used for beam prediction, if predicted best K1 beams include a measured best beam, or a predicted best beam is among measured best K2 beams, it indicates that the prediction is accurate. The AI model is used for M beam predictions, and there are N correct predictions, then the prediction accuracy is N/M, where K1 and K2 are positive integers, such as 1, 2, 3, 4 or 5.

In some embodiments, a DL transmission beam ID may be equivalent to the reference signal resource ID. For example, it may be a synchronization signal block (SSB) ID, a sounding reference signal (SRS) ID, a CSI-reference signal (CSI-RS) ID, etc. A DL receiving beam ID may be a receive beam ID of the terminal, and a beam pair ID may be an ID corresponding to a combination of a DL transmission beam and a DL receiving beam.

In some embodiments, terms "synchronization signal (SS)", "SSB", "RS", "pilot" and "pilot signal" are interchangeable.

In some embodiments, the best beam may be a beam with the strongest L1-RSRP or L1-SINR.

In some embodiments, the performance of the AI functionality or AI model includes a beam or beam pair prediction accuracy under a L1-RSRP difference being within a first threshold. The L1-RSRP difference is a difference between a measured L1-RSRP of a predicted best beam or beam pair and a measured L1-RSRP of a measured best beam or beam pair.

For example, when the AI model is used for beam prediction, if the difference between the measured L1-RSRP of the predicted best beam or beam pair and the measured L1-RSRP of the measured best beam or beam pair is less than the first threshold, it indicates that the prediction is accurate. The AI model is used for P beam predictions, and there are Q predictions in which the difference between the measured L1-RSRP of the predicted best beam or beam pair and the measured L1-RSRP of the measured best beam or beam pair is less than the first threshold, and thus the beam or beam pair prediction accuracy under L1-RSRP difference being within the first threshold is Q/P. The predicted best beam represents a best beam predicted by the AI model, and the measured L1-RSRP represents an L1-RSRP obtained through beam measurement. The measured L1-RSRP of the predicted best beam is obtained by determining a best beam predicted by the AI model, and then measuring the best beam. The measured best beam represents a best beam obtained through actual measurement. For example, the actual measurement may be to measure an L1-RSRP or L1-SINR of each beam, respectively, and a beam with the largest L1-RSRP or L1-SINR is the best beam. The measured L1-RSRP of the measured best beam is obtained by determining the measured best beam through actual measurement, and measuring an L1-RSRP of the measured best beam.

In some embodiments, the first threshold may be, for example, 1dB, and the beam or beam pair prediction accuracy under the L1-RSRP difference being within the first threshold may be a beam or beam pair prediction accuracy under the L1-RSRP difference being within 1dB. The L1-RSRP difference is the difference between the measured L1-RSRP of the predicted best beam or beam pair and the measured L1-RSRP of the measured best beam or beam pair.

In some embodiments, the performance of the AI functionality or AI model includes an L1-RSRP differential metric. The L1-RSRP differential metric is a differential metric between the measured L1-RSRP of the predicted best beam or beam pair and the measured L1-RSRP of the measured best beam or beam pair.

In some embodiments, the L1-RSRP differential metric may be an average value of L1-RSRP differences. For example, by using the AI model to generate one or more predictions, A predicted best beams are obtained. Measurements are then taken for each of these A predicted best beams, yielding the L1-RSRP measurements of the A predicted best beams. The difference between the measured L1-RSRP of each of the A predicted best beams and the measured L1-RSRP of the measured best beam is calculated respectively, and then an average value of the differences is obtained, which is the average value of L1-RSRP differences, i.e., the L1-RSRP differential metric. The A best beams may be A best beams obtained through one prediction process using the AI model, or obtained through a plurality of prediction processes using the AI model.

In some embodiments, the L1-RSRP differential metric may be a cumulative distribution function of L1-RSRP differences. For example, a value of the cumulative distribution function of L1-RSRP differences at a fixed percentage point is the L1-RSRP differential metric.

In some embodiments, the L1-RSRP differential metric may be a value of the cumulative distribution function at 5%, for example, YdB.

In some embodiments, the L1-RSRP differential metric may be a ratio of L1-RSRP differences being less than or equal to a second threshold. For example, the AI model is used for A predictions, and there are B L1-RSRP differences being less than or equal to the second threshold, then the L1-RSRP differential metric is B/A.

In some embodiments, the L1-RSRP differential metric may be a ratio of L1-RSRP differences being greater than a third threshold. For example, the AI model is used for C predictions, and there are D L1-RSRP differences being greater than the third threshold, then the L1-RSRP differential metric is D/C.

Greater than the third threshold may refer to being greater than or equal to the third threshold, which is not limited by the disclosure. The first threshold, the second threshold and the third threshold in the disclosure can be set according to the actual situation, and the first threshold, the second threshold and the third threshold may be the same or different.

In some embodiments, the performance of the AI functionality or AI model includes a predicted L1-RSRP differential metric. The predicted L1-RSRP differential metric is a differential metric between a predicted L1-RSRP of a predicted best beam or beam pair and a measured L1-RSRP of the predicted best beam or beam pair.

The predicted L1-RSRP represents a predicted L1-RSRP obtained by predicting an L1-RSRP of a beam through the AI model. That is, the predicted L1-RSRP of the predicted best beam or beam pair is obtained by determining the predicted best beam by using the AI model, and then predicting the L1-RSRP of the predicted best beam using the AI model.

In some embodiments, the predicted L1-RSRP differential metric may be an average value of L1-RSRP differences.

In some embodiments, the predicted L1-RSRP differential metric may be a cumulative distribution function of predicted L1-RSRP differences.

In some embodiments, the predicted L1-RSRP differential metric may be a ratio of L 1-RSRP differences being less than or equal to a fourth threshold.

In some embodiments, the predicted L1-RSRP differential metric may be a ratio of L 1-RSRP differences being greater than a fifth threshold.

The predicted L1-RSRP difference is the difference between the predicted L1-RSRP of the predicted best beam or beam pair and the measured L1-RSRP of the predicted best beam or beam pair.

The best predicted beam and the predicted best beam in the disclosure have the same meaning and are interchangeable.

In some embodiments, the performance of the AI functionality or AI model includes a throughput of the terminal. For example, it is possible to determine a SINR of the predicted best beam or beam pair and the best measurement beam or beam pair, and calculate the corresponding capacity of each beam or beam pair based on the Shannon capacity. A difference between corresponding capacities of two beams or beam pairs can be taken as an average difference of the throughput of the terminal.

In some embodiments, the throughput of the terminal may be an average throughput or a throughput of the cumulative distribution function at a fixed percentage, such as 5% or 95%.

In some embodiments, the performance of the AI functionality or AI model includes a reference signal overhead. The reference signal overhead is how many reference signal resources the AI model needs.

The size of the set B input to the AI model and the number of historical measurement times for the time domain beam prediction have influence on the reference signal overhead.

In some embodiments, the performance of the AI functionality or AI model includes an uplink control information overhead. If the AI model is an AI model deployed at the network device side, the terminal needs to send the measurement result of the set B to the network device, and the uplink control information overhead is a signaling overhead of sending the measurement result of the set B.

In some embodiments, the performance of the AI functionality or AI model includes a prediction delay. For example, the unit of the prediction delay may be milliseconds (ms), Multiple pieces of beam information measured at a moment A are input into the AI model, and the best beam is obtained at a moment B through the prediction of the AI model, the prediction delay is a difference between the moment A and the moment B. For example, the smaller the prediction delay, the better the performance of the AI model.

In some embodiments, the first information may include an identifier of an AI functionality or an AI model supported by the terminal. The identifier of the AI functionality is used to identify the AI functionality or to indicate the AI functionality. The identifier of the AI model is used to identify the AI model or to indicate then AI model.

In some embodiments, the first information may include a condition for the AI functionality or the AI model supported by the terminal.

In some embodiments, the condition may include a condition or an additional condition, and it may represent conditions (environments) to which an AI model is applicable, or may represent characteristics of an AI model. The condition of the AI functionality or AI model includes an application condition for the AI functionality or AI model, such as beam prediction, CSI compression, CSI prediction, positioning, etc., which is not limited in the disclosure. For another example, the AI functionality or AI model is used for spatial domain prediction or time domain beam prediction.

The disclosure takes the application of the AI functionality or AI model in the spatial domain beam prediction as an example to illustrate the condition of the AI functionality or AI model. The condition includes at least one of: a number of beams or beam pairs in a first beam set, in which a measurement value of the first beam set is used as an input to the AI model; a beam pattern of a beam or beam pair in a first beam set; a number of beams or beam pairs in a second beam set, in which an output of the AI model is used to obtain beam information in the second beam set; a beam pattern of a beam or beam pair in a second beam set; a relationship between a first beam set and a second beam set; a content input to the AI model; a content output from the AI model; monitoring information on the performance of the AI functionality or the AI model; assistance information; an applicable deployment scenario; a beam codebook for an applicable network device; a beam codebook for an applicable terminal; distribution information of an applicable terminal; a number of measurement instances input to the AI model; a number of prediction instances output from the AI model; or a moving speed of an applicable terminal.

In some embodiments, terms "codebook", "codeword" and "precoding matrix" are interchangeable. For example, codebook may be a collection of one or more codewords/precoding matrices.

In some embodiments, the condition of the AI functionality or AI model includes a number of beams or beam pairs in a first beam set. A measured value of the first beam set is used as an input of the AI model. That is, the number of beams or beam pairs in the first beam set indicates a number of measured values input to the AI model. The performance of the AI model varies depending on different numbers of measured values input to the AI model. It is understood that the terminal sends the number of beams or beam pairs in the first beam set to the network device, so that the network device may determine whether the AI model meets a performance requirement according to the number of beams or beam pairs in the first beam set to which the AI model is applicable, and then indicate to the terminal to activate or deactivate the AI model. The measured value of the first beam set is obtained by measuring the beams or beam pairs in the first beam set. Measuring the beams or beam pairs refers to measuring an L1-RSRP and/or an L1-SINR of reference signal resources, such as SSB, CSI-RS, SRS, etc.

In some embodiments, the first beam set may be the set B.

In some embodiments, the condition of the AI functionality or AI model includes a beam pattern of a beam or beam pair in the first beam set.

In some embodiments, the beam pattern may be expressed as which direction reference signal is sent and which direction reference signal is not sent.

In some embodiments, the condition of the AI functionality or AI model includes a number of beams or beam pairs in a second beam set. An output of the AI model is used to obtain beam information in the second beam set.

For example, the beam or beam pair in the first beam set is measured first, and then the obtained measured value is input into the AI model to obtain the beam information of the beam or beam pair in the second beam set. The number of beams or beam pairs and the beam pattern in the first beam set and the second beam set may be the condition of the AI functionality or AI model.

In some embodiments, the second beam set may be the set A.

In some embodiments, the condition of the AI functionality or AI model includes a relationship between the first beam set and the second beam set.

For example, the relationship between the first beam set and the second beam set may be that the first beam set is a subset of the second beam set, or the first beam set is a wide beam and the second beam set is a narrow beam, which is not limited by the disclosure.

In some embodiments, the condition of the AI functionality or AI model includes a content input to the AI model.

For example, the input to the AI model includes L1-RSRPs and/or identifiers corresponding to the beams or beam pairs in the first beam set. That is, the input of the AI model may be L1-RSRPs corresponding to the beams or beam pairs in the first beam set, or identifiers corresponding to the beams or beam pairs in the first beam set, and L1-RSRPs and identifiers corresponding to the beams or beam pairs in the first beam set.

In some embodiments, the condition of the AI functionality or AI model includes a content output from the AI model.

For example, the output from the AI model is L1-RSRPs and/or identifiers of beams or beam pairs in a second beam set.

In some embodiments, the condition of the AI functionality or AI model includes monitoring information on the performance of the AI functionality or AI model.

For example, the monitoring information on the performance of the AI functionality or AI model includes a performance of an AI functionality or AI model monitored by the terminal, performance of an AI functionality or AI model monitored by the network device, performance of an AI functionality or AI model monitored by the terminal and the network device together, or a performance metric for monitoring an AI functionality or AI model such as the above different types of performance. When a certain type of performance of the AI functionality or AI model is poor, it is considered that the AI functionality or AI model needs to be deactivated or updated.

In some embodiments, the condition of the AI functionality or AI model includes assistance information.

In some embodiments, the condition of the AI functionality or AI model includes an applicable deployment scenario. For example, the deployment scenario includes an urban macro cell, an urban micro cell, and an indoor scenario. The deployment scenario may also include different inter-cell distances (ISDs), such as 500m and 200m.

In some embodiments, the condition of the AI functionality or AI model includes a beam codebook for an applicable network device.

For example, the beam codebook for the applicable network device is the beam codebook used by the applicable network device for transmission.

In some embodiments, the condition of the AI functionality or AI model includes a beam codebook for an applicable terminal.

For example, the beam codebook of the applicable terminal is the beam codebook used by the applicable terminal for transmission.

In some embodiments, the condition of the AI functionality or AI model includes distribution information of an applicable terminal.

In some embodiments, the distribution information of the terminal may be a proportion of indoor users and a proportion of outdoor users.

In some embodiments, the condition of the AI functionality or AI model include: a number of measurement instances input to the AI model.

For example, if the AI model is used for time beam prediction, the input to the AI model includes a plurality of time instances, i.e., measurement results at different times. The condition of the AI model includes a number of input measurement instances. Different numbers of measurement instances input into the AI model may affect the performance of the AI model.

In some embodiments, the condition of the AI functionality or AI model includes a number of prediction instances output from the AI model.

For example, if the AI model is used for time beam prediction, the output from the AI model includes a plurality of prediction instances. The condition of the AI model includes the number of output prediction instances. Different numbers of prediction instances output by the AI model may affect the performance of the AI model.

In some embodiments, the condition of the AI functionality or AI model includes a moving speed of an applicable terminal.

For example, the moving speed of the applicable terminal indicate the moving speed of the terminal to which the AI model can be applied. For example, the AI model is suitable for a terminal at a moving speed A. The moving speed may be a magnitude of speed or a speed range.

In some embodiments, the network device may determine the AI functionality or AI model to be activated or deactivated based on the received condition of each AI functionality or AI model. For example, if the network device needs to perform beam prediction, the AI functionality or AI model for beam prediction is activated. For another example, since the number of beams or beam pairs in the second beam set affects the AI model prediction accuracy, the network device may select the AI model to be activated or deactivated based on the received number of beams or beam pairs in the second beam set of the AI model.

In some embodiments, the first information includes capability information, which is used to indicate a supported AI functionality or AI model.

For example, the terminal may send the first information when sending the capability information.

In some embodiments, the first information includes certification information indicating a certification of the AI functionality and/or the AI model.

For example, the terminal may send the first information when performing a certification of the AI functionalities or AI models.

In some embodiments, the AI functionality corresponds to one or more AI models.

In some embodiments, in response to performing a certification of the AI functionality, the performance of the AI functionality includes one or more performance values.

a performance value represents a numerical value corresponding to a type of performance.

For example, the performance of the AI functionality may be a type of performance. For example, the performance of the AI functionality includes a beam or beam pair prediction accuracy, and the performance value may be one or more of accuracy A, accuracy B and accuracy C.

For another example, the performance of the AI functionality includes multiple types of performance. For example, the performance of the AI functionality includes a beam or beam pair prediction accuracy, an L1-RSRP differential metric and a prediction delay, the performance values include accuracy A, differential metric B and delay C.

In some embodiments, in response to performing a certification of the AI functionality, the performance of the AI functionality includes a range of a performance value.

In some embodiments, in response to performing a certification of the AI functionality, the performance of the AI functionality includes a performance value, which is a first performance value among performance values corresponding to a plurality of AI models. The first performance value is a maximum value or a minimum value.

In some embodiments, in response to performing a certification of the AI functionality, the performance of the AI functionality includes a plurality of performance values corresponding to a plurality of AI models.

In some embodiments, in response to performing a certification of the AI functionality, the performance of the AI functionality includes a range of the performance value, and the range is a range composed of performance values corresponding to a plurality of AI models.

For example, an AI functionality corresponds to an AI model, the same type of performance of the AI functionality includes a performance value, which is the performance value of the AI model corresponding to the AI functionality. For another example, an AI functionality corresponds to a plurality of AI models, the same type of performance of the AI functionality includes a performance value, which may be a maximum performance value, a minimum performance value, an average performance value or a value at a specified position among performance values of the plurality of AI models corresponding to the AI functionality. For another example, an AI functionality corresponds to a plurality of AI models, the same type of performance of the AI functionality may include a plurality of performance values, which are performance values of the plurality of AI models corresponding to the AI functionality. For another example, the AI functionality corresponds to a plurality of AI models, the same type of performance of the AI functionality may be a range of a performance value composed of performance values corresponding to the plurality of AI models of the AI functionality. The range of the performance value may be a range constituted by a maximum value and a minimum value of the performance values of the plurality of AI models corresponding to the AI functionality. Certainly, any two performance values may be selected from the plurality of performance values according to rules to constitute the range, which is not limited in the disclosure.

In some embodiments, the performance includes different types of performances. The AI functionality or AI model is used for spatial domain beam prediction, and each of the different types of performance corresponds to a performance value.

For example, the performance of the AI functionality or AI model includes a beam or beam pair prediction accuracy, an L1-RSRP differential metric and a predicted L1-RSRP differential metric, each type corresponds to a performance value. That is, the beam or beam pair prediction accuracy corresponds to a performance value, the L1-RSRP differential metric corresponds to a performance value, and the predicted L1-RSRP differential metric corresponds to a performance value.

In some embodiments, the performance includes different types of performance. The AI functionality or AI model is used for time domain beam prediction, each of the different types of performance corresponds to a plurality of performance values. The plurality of performance values includes performance values corresponding to each prediction instances.

For example, the performance of the AI functionality or AI model includes a beam or beam pair prediction accuracy, an L1-RSRP differential metric, a predicted L1-RSRP differential metric and other types of performance, each type corresponds to a plurality of performance values. Taking the beam or beam pair prediction accuracy as an example, the beam or beam pair prediction accuracy of each prediction instance is included.

For another example, the AI functionality is used for time domain beam prediction, if an AI functionality corresponds to an AI model and there is a prediction instance of the AI model, the performance of each type of AI functionality corresponds to a performance value. If an AI function corresponds to a plurality of AI models and there is a prediction instance of the AI model, each type of performance of each AI model corresponding to the AI functionality corresponds to a performance value, and the performance corresponding to the AI functionality may be a maximum value, a minimum value, an average value or a value at a specified position among the performance values of the plurality of AI models, or a range of performance values, or a performance value of this type corresponding to each AI model. If an AI functionality corresponds to an AI model and there is a plurality of prediction instances of the AI model, the performance corresponding to the AI functionality includes a plurality of performance values corresponding to each type of performance of the AI model, and the plurality of performance values include the performance value corresponding to each prediction instance. If the AI functionality corresponds to a plurality of AI models and there is a plurality of prediction instances of the AI models, the AI functionality includes performance values of each the prediction instance. The performance value of each prediction instance may be performance values of the plurality of AI models corresponding to the AI functionality in the prediction instance, a maximum value, a minimum value or an average value of performance values of the plurality of AI models corresponding to the AI functionality in the prediction instance, or a range of performance values composed of performance values of the plurality of AI models corresponding to the AI functionality in the prediction instance.

In some embodiments, performance values corresponding to one or more types of performance in different prediction instances may be sent independently.

In some embodiments, the name of the "first information" is not limited. It may also be referred to as "performance information", "capability information" and the like.

In some embodiments, the name of "information" is not limited to those listed in the embodiments. Terms "information", "message", "signal", "signaling", "report", "configuration", "indication", "instruction", "command", "channel", "parameter", "domain", "field", "symbol", "symbol", "codebook", "codeword", "codepoint", "bit", "data" and "program" are interchangeable.

In some embodiments, terms "codebook", "codeword" and "precoding matrix" are interchangeable. For example, codebook may be a collection of one or more codewords/precoding matrices.

In some embodiments, terms "certain", "predetermined", "preset", "set", "indicated", "a specific", "any" and "first" are interchangeable. That is, "certain A", "predetermined A", "preset A", "set A", "indicated A", "a specific A", "any A" and "first A" may be interpreted as "A pre-specified in a protocol", "A obtained through setting, configuration or indication", "certain A", "a specific A", "any A" or "first A", which is not limited herein.

At step S2102, the network device 102 determines an AI functionality or AI model based on the first information.

In some embodiments, the first information includes a performance of AI functionalities or AI models supported by the terminal. The network device may determine the AI functionalities or AI models based on a performance requirement and the received performance of each AI functionality or AI model.

For example, the performance requirement is that the beam prediction accuracy of the AI model is greater than A. Based on the performance received for each AI model, activate the AI model with a beam prediction accuracy exceeding A, or deactivate an AI model with a beam prediction accuracy bellowing than A.

In some embodiments, the first information includes an identifier of an AI functionality or an identifier of an AI model supported by the terminal. The network device may receive an identifier of an AI functionality or an identifier of an AI model corresponding to the performance of each AI functionality or AI model, and then directly indicate an identifier of an AI functionality or an AI model to activate or deactivate the AI functionality or the AI model.

In some embodiments, the first information includes a condition for an AI functionality or an AI model supported by the terminal. The network device may determine an AI functionality or an AI model to be activated or deactivated based on a performance requirement and a received condition for an AI functionality or AI model.

For example, a condition of an AI model includes an AI model for a beam prediction. When the network device needs to perform a beam prediction, it selects and activates an AI model for a beam prediction based on a received condition of each AI model.

At step S2103, the network device 102 sends second information to the terminal 101.

In some embodiments, the terminal 101 receives the second information sent by the network device.

In some embodiments, the second information is used to indicate the terminal to manage an AI functionality or an AI model deployed at the terminal side, such as configuring, activating, deactivating, switching, and falling back to non-AI mode.

In some embodiments, the terminal manages an AI functionality or an AI model based on the second information. For example, the second information indicates the terminal to activate an AI model X, or deactivate an AI model Y.

The communication method according to the embodiments of the disclosure may include at least one of step S2101-step S2103. For example, step S2101 may be implemented as an independent embodiment, and steps S2101 and S2102 may be implemented as an independent embodiment.

In some embodiments, steps S2102 and S2103 are optional. This step may be omitted and replaced in different embodiments.

In some embodiments, reference may be made to other optional implementations described before or after the description of FIG. 2.

FIG. 3a is a flowchart of a communication method illustrated according to an embodiment of the disclosure. As illustrated in FIG. 3a, an embodiment of the disclosure involves in a communication method. The method is performed by the terminal 101, and includes the following steps.

At step S3101, first information is sent.

Optional implementations of step S3101 may refer to optional implementations of step S2101 in FIG. 2, and other related parts in the embodiment of FIG. 2, which will not be repeated herein.

In some embodiments, the terminal 101 sends the first information to the network device 102, and it may also send the first information to other objects, which is not limited herein.

At step S3102, second information is obtained.

Optional implementations of step S3102 may refer to optional implementations of step S2103 in FIG. 2, and other related parts in the embodiment of FIG. 2, which will not be repeated herein.

In some embodiments, the terminal 101 receives the second information sent by the network device 102, and it may also receive the second information sent by other objects, which is not limited herein.

In some embodiments, the terminal 101 obtains the second information specified by a protocol.

In some embodiments, the terminal 101 obtains the second information from one or more upper layer(s).

In some embodiments, the terminal 101 obtains the second information through processing.

In some embodiments, step S3102 is omitted, and the terminal 101 autonomously implements a function indicated by the second information, or the above function is default or preset.

The communication method according to the embodiments may include at least one of step S3101 or step S3102. For example, step S3101 may be implemented as an independent embodiment.

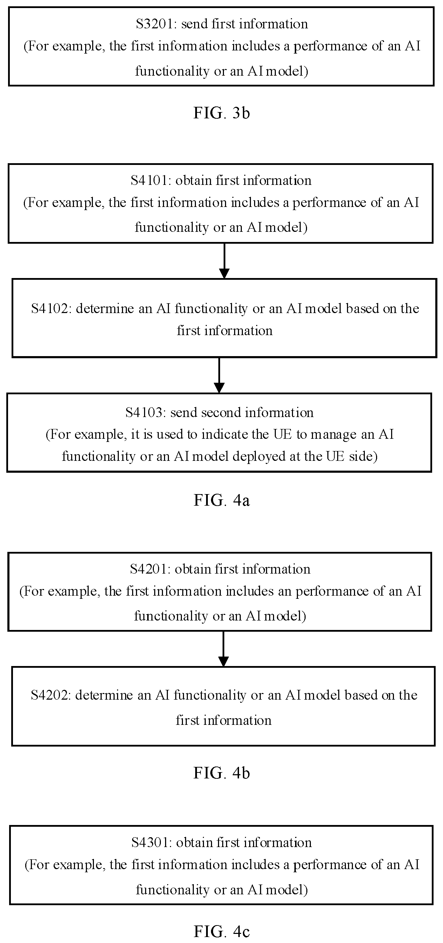

FIG. 3b is a flowchart of a communication method illustrated according to an embodiment of the disclosure. As illustrated in FIG. 3b, an embodiment of the disclosure involves in a communication method. The method is performed by the terminal 101, and includes the following steps.

At step S3201, first information is sent.

Optional implementations of step S3201 may refer to optional implementations of step S2101 in FIG. 2 and step S3101 in FIG. 3a, and other related parts in the embodiments of FIG. 2 and FIG. 3a, which will not be repeated herein.

In some embodiments, the terminal 101 sends the first information to the network device 102, and it may also send the first information to other objects, which is not limited herein.

In some embodiments, the first information further includes at least one of: an identifier of an AI functionality or an identifier of an AI model supported by the terminal; or a condition for an AI functionality or an AI model supported by the terminal.

In some embodiments, the condition includes at least one of: a number of beams or beam pairs in a first beam set, in which a measurement value of the first beam set is used as an input to the AI model; a beam pattern of a beam or beam pair in a first beam set; a number of beams or beam pairs in a second beam set, in which an output of the AI model is used to obtain beam information in the second beam set; a beam pattern of a beam or beam pair in a second beam set; a relationship between a first beam set and a second beam set; a content input to the AI model; a content output from the AI model; monitoring information on the performance of the AI functionality or the AI model; an applicable deployment scenario; a beam codebook for an applicable network device; a beam codebook for an applicable terminal; distribution information of an applicable terminal; a number of measurement instances input to the AI model; a number of prediction instances output from the AI model; or a moving speed of an applicable terminal.

In some embodiments, the first information includes at least one of: capability information indicating an AI functionality and/or an AI model supported by the terminal; or certification information indicating a certification of the AI functionality and/or the AI model.

In some embodiments, the performance includes at least one of the following types: a beam or beam pair prediction accuracy; a beam or beam pair prediction accuracy under a layer 1 reference signal received power (L1-RSRP) difference being within a first threshold, in which the L1-RSRP difference is a difference between a measured L1-RSRP of a predicted best beam or beam pair and a measured L1-RSRP of a measured best beam or beam pair; an L1-RSRP differential metric, in which the L1-RSRP differential metric is a differential metric between a measured L1-RSRP of a predicted best beam or beam pair and a measured L1-RSRP of a measured best beam or beam pair, the L1-RSRP differential metric comprises at least one of: an average value of L1-RSRP differences, an accumulative distribution function of L1-RSRP differences, a ratio of L1-RSRP differences being less than or equal to a second threshold or a ratio of L1-RSRP differences being greater than a third threshold, and the L1-RSRP difference is a difference between the measured L1-RSRP of the predicted best beam or beam pair and the measured L1-RSRP of the measured best beam or beam pair; a predicted L1-RSRP differential metric, in which the predicted L1-RSRP differential metric is a differential metric between a predicted L1-RSRP of a predicted best beam or beam pair and a measured L1-RSRP of the best predicted beam or beam pair; the predicted L1-RSRP differential metric comprises at least one of: an average value of predicted L1-RSRP differences, an accumulative distribution function of predicted L1-RSRP differences, a ratio of predicted L1-RSRP differences being less than or equal to a fourth threshold or a ratio of predicted L1-RSRP differences being greater than a fifth threshold, and a predicted L1-RSRP difference is a difference between the predicted L1-RSRP of the predicted best beam or beam pair and the measured L1-RSRP of the predicted best beam or beam pair; a throughput of the terminal; a reference signal overhead; an uplink control information overhead; or a prediction delay.

In some embodiments, in response to performing a certification of the AI functionality and/or the AI model, the terminal sends the first information to the network device.

In some embodiments, in response to performing the certification of the AI functionality, the performance of the AI functionality includes at least one of: one or more performance values; or a range of a performance value.

In some embodiments, the AI functionality includes a plurality of AI models, a performance value is a first performance value among performance values corresponding to the plurality of AI models, and the first performance value is a maximum value or a minimum value.

In some embodiments, the AI functionality includes a plurality of AI models, a plurality of performance values are respective performance values corresponding to the plurality of AI models.

In some embodiments, the AI functionality includes a plurality of AI models, the range of the performance value is a range of performance values corresponding to the plurality of AI models.

In some embodiments, the performance of the AI functionality or AI model satisfies at least one of: the AI functionality or AI model is used for spatial domain prediction, and each of the different types of performance corresponds to a performance value; or the AI functionality or AI model is used for time domain beam prediction, and each of different types of performance corresponds to one or more performance values including performance values corresponding to each prediction instance.

FIG. 4a is a flowchart of a communication method illustrated according to an embodiment of the disclosure. As illustrated in FIG. 4a, an embodiment of the disclosure involves in a communication method. The method includes the following steps.

At step S4101, first information is obtained.

Optional implementations of step S4101 may refer to optional implementations of step S2101 in FIG. 2, and other related parts in the embodiment of FIG. 2, which will not be repeated herein.

In some embodiments, the network device 102 receives the first information sent by the terminal 101, and it may also receive the first information sent by other objects, which is not limited herein.

In some embodiments, the network device 102 obtains the first information specified by a protocol.

In some embodiments, the network device 102 obtains the first information from one or more upper layer(s).

In some embodiments, the network device 102 obtains the first information the second information through processing.

In some embodiments, step S4101 is omitted, and the network device 102 autonomously implements a function indicated by the first information or the above function is default or is default or is configured by default.

At step S4102, an AI functionality or AI model is determined based on the first information.

Optional implementations of step S4102 may refer to optional implementations of step S2102 in FIG. 2, and other related parts in the embodiment of FIG. 2, which will not be repeated herein.

In some embodiments, the AI functionality or AI model is determined based on the first information.

At step S4103, second information is sent.

Optional implementations of step S4103 may refer to optional implementations of step S2103 in FIG. 2, and other related parts in the embodiment of FIG. 2, which will not be repeated herein.

In some embodiments, the network device 102 sends the second information to the terminal 101, and it may also send the second information to other objects, which is not limited herein.

The communication method according to the embodiments of the disclosure may include at least one of steps S4101-S4103. For example, step S4101 may be implemented as an independent embodiment, and steps S4101 and S4102 may be implemented as an independent embodiment.

In some embodiments, step S4102 is optional. This step may be omitted and replaced in different embodiments.

In some embodiments, reference may be made to other optional implementations described before or after the description of FIG. 2.

FIG. 4b is a flowchart of a communication method illustrated according to an embodiment of the disclosure. As illustrated in FIG. 4b, an embodiment of the disclosure involves in a communication method. The method includes the following steps.

At step S4201, first information is obtained.

Optional implementations of step S4201 may refer to optional implementations of step S2101 in FIG. 2, and other related parts in the embodiment of FIG. 2, which will not be repeated herein.

In some embodiments, the network device 102 receives the first information sent by the terminal 101, and it may also receive the first information sent by other objects, which is not limited herein.

In some embodiments, the network device 102 obtains the first information specified by a protocol.

In some embodiments, the network device 102 obtains the first information from one or more upper layer(s).

In some embodiments, the network device 102 obtains the first information the second information through processing.

In some embodiments, step S4201 is omitted, and the network device 102 autonomously implements a function indicated by the first information or the above function is default or is configured by default.

At step S4202, an AI functionality or AI model is determined based on the first information.

Optional implementations of step S4202 may refer to optional implementations of step S2102 in FIG. 2, and other related parts in the embodiment of FIG. 2, which will not be repeated herein.

In some embodiments, an AI functionality or an AI model deployed at the terminal side is managed based on the first information.

FIG. 4c is a flowchart of a communication method illustrated according to an embodiment of the disclosure. As illustrated in FIG. 4c, an embodiment of the disclosure involves in a communication method. The method includes the following step.

At step S4301, first information is obtained.

Optional implementations of step S4201 may refer to optional implementations of step S2101 in FIG. 2 and step S4101 in FIG. 4a, and other related parts in the embodiments of FIG. 2 and FIG. 4a, which will not be repeated herein.

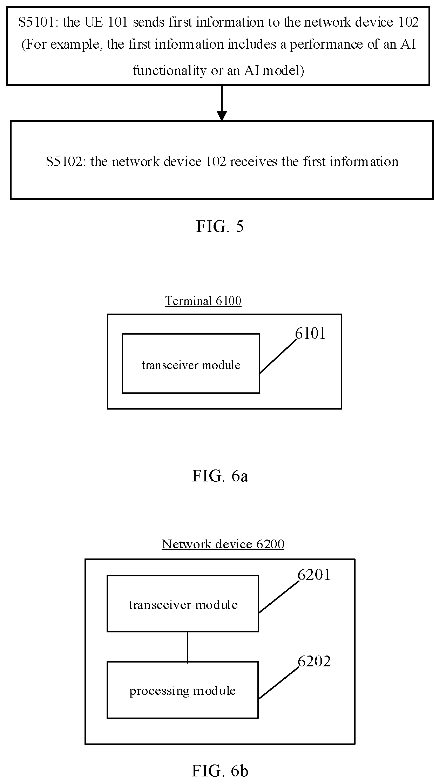

FIG. 5 is a flowchart of a communication method illustrated according to an embodiment of the disclosure. As illustrated in FIG. 5, an embodiment of the disclosure involves in a communication method. The method includes the following steps.

At step S5101, the terminal 101 sends first information to the network device 102.

Optional implementations of step S5101 may refer to optional implementations of step S2101 in FIG. 2 and step S3101 in FIG. 3a, and other related parts in the embodiments of FIG. 2 and FIG. 3a, which will not be repeated herein.

In some embodiments, the above method may include the methods of the above embodiments related to the communication system 100, the terminal 101 and the network device 102, which will not be repeated here.

At step S5102, the network device 102 receives the first information.

Optional implementations of step S5102 may refer to optional implementations of step S2101 in FIG. 2 and step S4101 in FIG. 4a, and other related parts in the embodiments of FIG. 2 and FIG. 4a, which will not be repeated herein.

In some embodiments, the above method may include the methods of the above embodiments related to the communication system 100, the terminal 101 and the network device 102, which will not be repeated here.

An embodiment of the disclosure also provides a communication method, which is provided in the following.

The terminal reports a performance corresponding to an AI functionality or AI model.

In some embodiments, the terminal reports the performance during functionality or model certification (or identification). For example, the terminal informs the network device of a functionality or a model supported by the terminal and a condition corresponding to the functionality or model. The condition includes:

whether the functionality or model is used for beam prediction, CSI compression, CSI prediction and positioning.

If used for beam prediction, whether it is spatial domain beam prediction or time domain beam prediction.

If used for spatial domain beam prediction, it includes: a number of and/or a pattern of a beams or a beam pair included in a set B for model input; a number of and/or a pattern of a beam or a beam pair included in a set A for model output; a relationship between the set B and the set A; an L1-RSRP and/or a beam ID as model input, and an L1-RSRP and/or a beam ID as model output; assistance information, what deployment it is suitable for; a beam codebook for an BS (gNB) and a beam codebook for a terminal; distribution information of an applicable terminal; a moving speed of an applicable terminal.

In some embodiments, the beam refers to "beam", and beam measurement is performed for measuring L1-RSRP and/or L1-SINR of a reference signal including SSB, CSI-RS and SRS. Beam indication refers to indicating a transmission configuration indication (TCI) state, and the TCI state includes at least one quasi co-location (QCL) type, such as QCL types A, B, C and D. The QCL type D is reception parameter information, commonly known as beam. Types A, B and C include at least one of parameters related to Doppler frequency shift, Doppler spread, average delay and delay spread. UL beam refers to spatial relation information, spatial filter parameter or UL TCI state.

In some embodiments, functionality ID or model ID may be reported.

In some embodiments, the terminal reports the performance based on the mechanism of terminal capability. For example, the terminal reports the functionality or model it supports and their corresponding performance.

In some embodiments, it also includes the above condition.

In some embodiments, differences between functionality identification and model identification are involved.

In some embodiments, during functionality identification, the terminal only informs the network device that it supports a certain functionality, and it does not need to inform the network device how many models it can support under this functionality. When the network device indicates the terminal to activate this functionality, the terminal may decide which model under this functionality needs to be activated by itself. Moreover, the terminal does not need to inform the network device when it switches between different models under this functionality.

In some embodiments, model identification is to inform the network device that the terminal supports a certain model. The model may correspond to one or more functionalities. The network device may indicate the terminal to activate or deactivate the model.

In some embodiments, the performance includes at least one of the following. Taking a beam prediction model as an example, the performance includes:
1) beam prediction accuracy: beam prediction accuracy of top 1/K beam (pair);
In some embodiments, correct prediction means that the predicted strongest beam (or beam pair) ID contains the measured strongest beam (or beam pair) ID or the predicted strongest beam (or beam pair) ID is contained in the N measured strongest beam (or beam pair) IDs. DL sending beam ID is equal to a reference signal resource ID, such as SSB ID, CSI-RS ID and SRS ID. DL receiving beam ID is an Rx beam ID of the terminal. Beam pair ID is an ID corresponding to a combination of a DL sending beam and a DL receiving beam.

In some embodiments, the strongest (beam) means that an L1-RSRP or L1-SINR (of the beam) is the strongest.

In some embodiments, this indicator may be the accuracy of output beam information derived by the model for many times, such as a ratio.

2) beam prediction accuracy under a L1-RSRP being within 1dB: an accuracy when a difference between a measured L1-RSRP of a predicted best beam (or beam pair) and a measured L1-RSRP of a best measurement beam (or beam pair) is within 1 dB;
In some embodiments, this indicator may be the accuracy of output beam information derived by the model for many times, such as a ratio.

3) an L1-RSRP differential metric (difference): a difference between a measured L1-RSRP of a predicted best beam (or beam pair) and a measured L1-RSRP of a best measurement beam (or beam pair). For example, it may be an average value, e.g., X dB, or a value at 5% percentage of the cumulative distribution function, e.g., Y dB;
In some embodiments, it may be a ratio of L1-RSRP differences being lower than a threshold or a ratio of L1-RSRP differences being higher than a threshold.

4) a predicted L1-RSRP difference: a difference between a predicted L1-RSRP of a predicted best beam (or beam pair) and a measured L1-RSRP of the predicted best beam (or beam pair). For example, it may be an average value, e.g., X dB, or a value at 5% percentage of the cumulative distribution function, e.g., Y dB;
In some embodiments, it may be a ratio of predicted L1-RSRP differences being lower than a threshold or a ratio of predicted L1-RSRP differences being higher than a threshold.

5) an average throughput of the terminal, or terminal throughput at 5% of the cumulative distribution function;
In some embodiments, based on the predicted strongest beam (or beam pair) and the strongest measurement beam (or beam pair), the SINRs corresponding to the two beams (or beam pairs) are obtained, and the capacities are calculated based on the Shannon capacity, and a difference between the capacities is the indicator.

6) a reference signal overhead;
It refers to how many reference signal resources the AI model needs, and the main influencing factors include the size of the set B corresponding to the model input and the number of historical measurement times in time domain prediction.

7) an UL control information overhead; and
In some embodiments, if it is a network (NW)-side model, the measurement result of the set B needs to be reported to the network, which causes a reporting signaling overhead.

8) a prediction delay (ms).
In some embodiments, when performing model identification, the performance of the model is reported.

In some embodiments, for spatial domain beam prediction, each of the above performance types corresponds to a performance value.

In some embodiments, for time domain beam prediction, if the model can predict beam information of a plurality of time instances simultaneously, the accuracy of beam information corresponding to different time instances may be reported independently.

In some embodiments, when performing functionality identification, the performance of the model corresponding to the functionality is reported.

In some embodiments, if the functionality corresponds to a plurality of models, a maximum performance value or a performance range for each of the above performance types is reported, or the performance corresponding to each model is reported separately.

In some embodiments, for spatial domain beam prediction, only one corresponding performance value or a set of performance values is reported. For time domain beam prediction, a performance value or a set of performance values corresponding to each predicted time instance is reported independently.

In some embodiments, a performance value or a set of performance values may refer to a type or a plurality of types of performance values.

The embodiments of the disclosure provide an apparatus for implementing any of the above methods. For example, an apparatus is provided, which includes units/modules for implementing steps performed by the terminal in any of the above methods. For another example, another apparatus is provided, which includes units/modules for implementing steps performed by the network device (e.g., AN device, CN functional node and CN device) in any of the above methods.

It should be understood that the units/modules in the above apparatus are divided based on their logical functions, and some or all of the above units/modules may be integrated on a single physical entity or may be physically separated in practical applications. In addition, the units/modules in the above apparatus may be implemented by software called by a processor. For example, the apparatus includes the processor that is connected to a memory. The memory stores indications, and the processor calls the indications stored in the memory to implement any of the above methods or to implement functions of the units/modules in the above apparatus. The processor may be a general-purpose processor, such as a central processing unit (CPU) or a micro-processor, and the memory is a memory in the apparatus or a memory external to the apparatus. Or, the units/modules in the apparatus may be implemented in the form of a hardware circuit. Some or all of the functions of the units/modules may be achieved through the design of the hardware circuit. The hardware circuit may be understood as one or more processors. For example, in an implementation, the hardware circuit is an application-specific integrated circuit (ASIC). Or, some or all of the functions of the units/modules are achieved through the design of a logical relationship between components in the circuit. As another example, in another implementation, the hardware circuit may be implemented through a programmable logic device (PLD). Taking a field programmable gate array (FPGA) as an example, a large number of logical gates are included therein, and their connection relationships are configured through a configuration file to implement some or all of the functions of the above units/modules. All the units/modules of the above apparatus may be implemented entirely through software called by a processor, or entirely through the hardware circuit, or partially through software called by a processor and partially through the hardware circuit.

In the embodiments of the disclosure, the processor is a circuit having signal processing capabilities. In an implementation, the processor may be a circuit having indication reading and executing capabilities, such as a CPU, a micro-processor, a graphics processing unit (GPU) (which is understood as a micro-processor), or a digital signal processor (DSP). In another implementation, the processor implements certain functions through the logical relationship of the hardware circuit, which may be fixed or re-configurable. For example, the processor may be a hardware circuit implemented by an ASIC or a PLD, such as FPGA. In the re-configurable hardware circuit, the procedure for the processor to load the configuration file to configure the hardware circuit is understood as a procedure for the processor to load the indications to implement some or all of the functions of the above units/modules. In addition, the processor may also be an artificial intelligence (AI)-designed hardware circuit, which is understood as an ASIC, such as a neural network processing unit (NPU), a tensor processing unit (TPU) and a deep learning processing unit (DPU).

FIG. 6a is a schematic structural diagram of a terminal provided by an embodiment of the disclosure. As illustrated in FIG. 6a, the terminal 6100 includes: a transceiver module 6101. In some embodiments, the transceiver module is configured to send first information to a network device. The first information includes a performance of an AI function or an AI model, and the AI function or the AI model is deployed at the terminal side. Optionally, the transceiver module is used to perform the communication steps S2101-S2102 such as transmission and/or reception performed by the terminal 101 in any of the above methods, which will not be repeated herein.

In some embodiments, the first information further includes at least one of: an identifier of an AI functionality or an AI model supported by the terminal; or a condition for an AI functionality or an AI model supported by the terminal.

In some embodiments, the condition includes at least one of: a number of beams or beam pairs in a first beam set, wherein a measurement value of the first beam set is used as an input to the AI model; a beam pattern of a beam or beam pair in a first beam set; a number of beams or beam pairs in a second beam set, wherein an output of the AI model is used to obtain beam information in the second beam set; a beam pattern of a beam or beam pair in a second beam set; a relationship between a first beam set and a second beam set; a content input to the AI model; a content output from the AI model; monitoring information on the performance of the AI functionality or the AI model; assistance information; an applicable deployment scenario; a beam codebook for an applicable network device; a beam codebook for an applicable terminal; distribution information of an applicable terminal; a number of measurement instances input to the AI model; a number of prediction instances output from the AI model; or a moving speed of an applicable terminal.

In some embodiments, the first information includes at least one of: capability information indicating an AI functionality and/or an AI model supported by the terminal; or certification information indicating a certification of the AI functionality and/or the AI model.

In some embodiments, the performance includes at least one of the following types: a beam or beam pair prediction accuracy; a beam or beam pair prediction accuracy under L1-RSRP difference being within a first threshold, wherein the L1-RSRP difference is a difference between a measured L1-RSRP of a predicted best beam or beam pair and a measured L1-RSRP of a measured best beam or beam pair; an L1-RSRP differential metric, wherein the L1-RSRP differential metric is a differential metric between a measured L1-RSRP of a predicted best beam or beam pair and a measured L1-RSRP of a measured best beam or beam pair; the L1-RSRP differential metric comprises at least one of: an average value of L1-RSRP differences, an accumulative distribution function of L1-RSRP differences, a ratio of L1-RSRP differences being less than or equal to a second threshold or a ratio of L1-RSRP differences being greater than a third threshold; and the L1-RSRP difference is a difference between the measured L1-RSRP of the predicted best beam or beam pair and the measured L1-RSRP of the measured best beam or beam pair; a predicted L1-RSRP differential metric, wherein the predicted L1-RSRP differential metric is a differential metric between a predicted L1-RSRP of a predicted best beam or beam pair and a measured L1-RSRP of the predicted best beam or beam pair; the predicted L1-RSRP differential metric comprises at least one of: an average value of predicted L1-RSRP differences, an accumulative distribution function of predicted L1-RSRP differences, a ratio of predicted L1-RSRP differences being less than or equal to a fourth threshold or a ratio of predicted L1-RSRP differences being greater than a fifth threshold; and a predicted L1-RSRP difference is a difference between the predicted L1-RSRP of the predicted best beam or beam pair and the measured L1-RSRP of the predicted best beam or beam pair; a throughput of the terminal; a reference signal overhead; an uplink control information overhead; or a prediction delay.

In some embodiments, the transceiver module 6101 sends the first information in the following manner. In response to performing a certification of the AI functionality and/or the AI model, the terminal sends the first information to the network device.

In some embodiments, in response to performing the certification of the AI functionality, the performance of the AI functionality includes at least one: one or more performance values; or a range of a performance value.

In some embodiments, the AI functionality includes a plurality of AI models, a performance value is a first performance value among performance values corresponding to the plurality of AI models, and the first performance value is a maximum value or a minimum value.

In some embodiments, the AI functionality includes a plurality of AI models, a plurality of performance values are respective performance values corresponding to the plurality of AI models.

In some embodiments, the AI functionality includes a plurality of AI models, the range of the performance value is a range of performance values corresponding to the plurality of AI models.

In some embodiments, the performance of the AI functionality or AI model satisfies at least one of: the AI functionality or the AI model is used for spatial domain beam prediction, and each of the different types of performance corresponds to a performance value; or the AI functionality or the AI model is used for time domain beam prediction, and each of the different types of performance corresponds to one or more performance values comprising performance values corresponding to each prediction instance.

FIG. 6b is a schematic structural diagram of a network device provided by an embodiment of the disclosure. As illustrated in FIG. 6b, the network device 6200 includes: a transceiver module 6201. In some embodiments, the transceiver module 6201 is configured to receive first information sent by a terminal. The first information includes a performance of an AI function or AI model, and the AI function or AI model is deployed at the terminal side. Optionally, the transceiver module is used to perform the communication steps S2101-S2104 such as transmission and/or reception performed by the terminal 101 in any of the above methods, which will not be repeated herein. In some embodiments, the network device 6200 may further include: a processing module 6202. The processing module 6202 is used for the network device 102 to manage the AI function or AI model deployed at the terminal side based on the first information.

In some embodiments, the first information further includes at least one of: an identifier of an AI functionality or an AI model supported by the terminal; or a condition for an AI functionality or an AI model supported by the terminal.

In some embodiments, the condition includes at least one: a number of beams or beam pairs in a first beam set, wherein a measurement value of the first beam set is used as an input to the AI model; a beam pattern of a beam or beam pair in a first beam set; a number of beams or beam pairs in a second beam set, wherein an output of the AI model is used to obtain beam information in the second beam set; a beam pattern of a beam or beam pair in a second beam set; a relationship between a first beam set and a second beam set; a content input to the AI model; a content output from the AI model; monitoring information on the performance of the AI functionality or the AI model; assistance information; an applicable deployment scenario; a beam codebook for an applicable network device; a beam codebook for an applicable terminal; distribution information of an applicable terminal; a number of measurement instances input to the AI model; a number of prediction instances output from the AI model; or a moving speed of an applicable terminal.

In some embodiments, the first information includes at least one of: capability information indicating an AI functionality and/or an AI model supported by the terminal; or certification information indicating a certification of the AI functionality and/or the AI model.

In some embodiments, the performance includes at least one of the following types: a beam or beam pair prediction accuracy; a beam or beam pair prediction accuracy under L1-RSRP difference being within a first threshold, wherein the L1-RSRP difference is a difference between a measured L1-RSRP of a predicted best beam or beam pair and a measured L1-RSRP of a measured best beam or beam pair; an L1-RSRP differential metric, wherein the L1-RSRP differential metric is a differential metric between a measured L1-RSRP of a predicted best beam or beam pair and a measured L1-RSRP of a measured best beam or beam pair; the L1-RSRP differential metric comprises at least one of: an average value of L1-RSRP differences, an accumulative distribution function of L1-RSRP differences, a ratio of L1-RSRP differences being less than or equal to a second threshold or a ratio of L1-RSRP differences being greater than a third threshold; and the L1-RSRP difference is a difference between the measured L1-RSRP of the predicted best beam or beam pair and the measured L1-RSRP of the measured best beam or beam pair; a predicted L1-RSRP differential metric, wherein the predicted L1-RSRP differential metric is a differential metric between a predicted L1-RSRP of a predicted best beam or beam pair and a measured L1-RSRP of the predicted best beam or beam pair; the predicted L1-RSRP differential metric comprises at least one of: an average value of predicted L 1 - RSRP differences, an accumulative distribution function of predicted L1-RSRP differences, a ratio of predicted L1-RSRP differences being less than or equal to a fourth threshold or a ratio of predicted L1-RSRP differences being greater than a fifth threshold; and a predicted L1-RSRP difference is a difference between the predicted L1-RSRP of the predicted best beam or beam pair and the measured L1-RSRP of the predicted best beam or beam pair; a throughput of the terminal; a reference signal overhead; an uplink control information overhead; or a prediction delay.

In some embodiments, the transceiver module 6201 receives the first information in the following manner. In response to performing a certification of the AI functionality and/or the AI model, the network device receives the first information sent by the terminal.

In some embodiments, in response to performing the certification of the AI functionality, the performance of the AI functionality includes at least one of the following: one or more performance values; or a range of a performance value.

In some embodiments, the AI functionality includes a plurality of AI models, a performance value is a first performance value among performance values corresponding to the plurality of AI models, and the first performance value is a maximum value or a minimum value.

In some embodiments, the AI functionality includes a plurality of AI models, a plurality of performance values are respective performance values corresponding to the plurality of AI models.

In some embodiments, the AI functionality includes a plurality of AI models, the range of the performance value is a range of performance values corresponding to the plurality of AI models.

In some embodiments, the performance of the AI functionality or AI model satisfies at least one of: the AI functionality or the AI model is used for spatial domain beam prediction, and each of the different types of performance corresponds to a performance value; or the AI functionality or the AI model is used for time domain beam prediction, and each of the different types of performance corresponds to one or more performance values comprising performance values corresponding to each prediction instance.

In some embodiments, the transceiver module includes a sending module and/or a receiving module. The sending module and the receiving module may be separated or integrated together. Optionally, the transceiver module may be replaced by the transceiver.

In some embodiments, the processing module may be one module or may include a plurality of sub-modules. Optionally, the plurality of sub-modules each performs all or part of the steps of the processing module. Optionally, the processing module may be replaced by the processor.

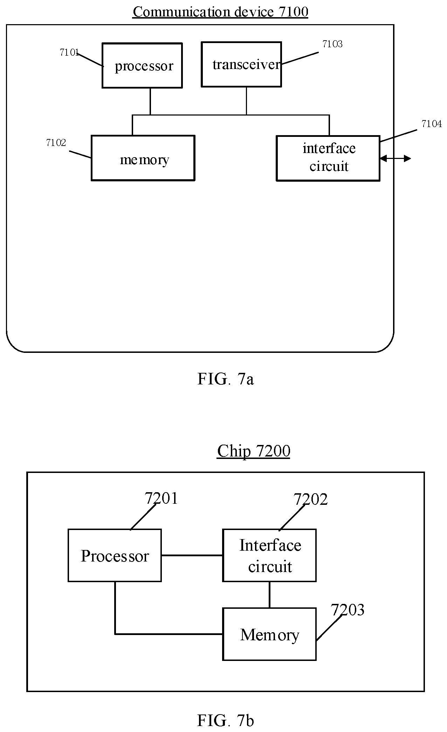

FIG. 7a is a schematic structural diagram of a communication device 7100 provided by an embodiment of the disclosure. The communication device 7100 may be a network device, a terminal, a chip, a chip system or a processor that supports the network device to implement any of the above methods, or a chip, a chip system or a processor that supports the terminal to implement any of the above methods. Optionally, the network device may be an AN device, a CN device, etc. Optionally, the terminal may be a terminal or the like. The communication device 7100 is used to implement the methods described in the above method embodiments, and for details refer to the descriptions in the above method embodiments.

As illustrated in FIG. 7a, the communication device 7100 includes one or more processors 7101. The processor 7101 may be a general-purpose processor or a dedicated processor, such as a baseband processor or a central processor. The baseband processor is used to process communication protocols and communication data, while the central processor is used to control the communication device, execute programs and process data of the programs. The communication device 7100 is used to implement any of the above methods. Optionally, the communication device may be a BS, a baseband chip, a terminal, a terminal chip, a DU or a CU.

In some embodiments, the communication device 7100 further includes one or more memories 7102 for storing indications. Optionally, all or part of the memories 7102 are external to the communication device 7100.

In some embodiments, the communication device 7100 includes one or more transceivers 7103. In this case, the transceiver 7103 performs the communication step S2101 such as transmission and/or reception in the above methods, and the processor 7101 performs other steps.

In some embodiments, the transceiver may include a receiver and/or a transmitter. The receiver and the transmitter may be separated or integrated together. Optionally, terms "transceiver", "transceiver unit", "transceiver machine" and "transceiver circuit" are interchangeable, and terms "transmitter", "transmitting unit", "transmitter machine" and "transmitting circuit" are also interchangeable. In addition, terms "receiver", "receiving unit", "receiver machine" and "receiving circuit" are interchangeable.

In some embodiments, the communication device 7100 further includes one or more interface circuits 7104. Optionally, the interface circuit 7104 is connected with the memory 7102, and it is used to receive signals from the memory 7102 or other devices and send signals to the memory 7102 or other devices. For example, the interface circuit 7104 can read the indications stored in the memory 7102 and send the indications to the processor 7101.

The communication device 7100 described in the above embodiments may be a network device or a terminal. However, the scope of the communication device 7100 is not limited in the disclosure, and the structure of the communication device 7100 is not limited by FIG. 7a. The communication device may be a standalone device or part of a larger device. For example, the communication device may be: (1) a standalone integrated circuit (IC), a chip, a chip system or a sub-system; (2) a collection of one or more ICs (optionally, the collection includes storage components for storing data and programs); (3) an ASIC, such as a modem; (4) a module that can be embedded in other devices; (5) a receiver, a terminal, a smart terminal, a cellular phone, a wireless device, a handheld device, a mobile unit, an in-vehicle device, a network device, a cloud device, an AI device, etc.; or (6) others.

FIG. 7b is a schematic structural diagram of a chip 7200 provided by an embodiment of the disclosure. The case that the communication device 7100 is a chip or a chip system can refer to the schematic structural diagram of the chip 7200 shown in FIG. 7b, which is not limited herein.

The chip 7200 includes one or more processors 7201, and is used to implement any of the above methods.

In some embodiments, the chip 7200 includes one or more interface circuits 7202. Optionally, the interface circuit 7202 is connected to a memory 7203, and it is used to receive signals from the memory 7203 or other devices and send signals to the memory 7203 or other devices. For example, the interface circuit 7202 can read indications stored in the memory 7203 and send the indications to the processor 7201.

In some embodiments, the interface circuit 7202 performs the communication step S2101 such as transmission and/or reception in the above methods, and the processor 7201 performs other steps.

In some embodiments, terms "interface circuit", "interface", "transceiver pin" and "transceiver" are interchangeable.

In some embodiments, the chip 7200 further includes one or more memories 7203 for storing indications. Optionally, all or part of the memories 7203 are external to the chip 7200.

The disclosure also provides a storage medium. The storage medium stores indications, and when the indications are executed by the communication device 7100, the communication device 7100 is caused to implement any of the above methods. Optionally, the storage medium is an electronic storage medium. Optionally, the storage medium may be a computer-readable storage medium or a storage medium readable by other devices, which is not limited herein. Optionally, the storage medium may be a non-transitory storage medium or a transitory storage medium, which is not limited herein.

The disclosure also provides a program product. When the program product is executed by the communication device 7100, the communication device 7100 is caused to implement any of the above methods. Optionally, the program product is a computer program product.

The disclosure also provides a computer program. When the computer program is executed by a computer, the computer is caused to implement any of the above methods.

## Claims

1. A communication method, comprising:
sending, by a terminal, first information to a network device, wherein the first information comprises a performance of an artificial intelligence (AI) functionality or an AI model, and the AI functionality or the AI model is deployed at the terminal side.

2. The method of claim 1, wherein the first information further comprises at least one of:
an identifier of an AI functionality or an AI model supported by the terminal; or
a condition for an AI functionality or an AI model supported by the terminal.

3. The method of claim 2, wherein the condition comprises at least one of:
a number of beams or beam pairs in a first beam set, wherein a measurement value of the first beam set is used as an input to the AI model;
a beam pattern of a beam or beam pair in a first beam set;
a number of beams or beam pairs in a second beam set, wherein an output of the AI model is used to obtain beam information in the second beam set;
a beam pattern of a beam or beam pair in a second beam set;
a relationship between a first beam set and a second beam set;
a content input to the AI model;
a content output from the AI model;
monitoring information on the performance of the AI functionality or the AI model;
assistance information;
an applicable deployment scenario;
a beam codebook for an applicable network device;
a beam codebook for an applicable terminal;
distribution information of an applicable terminal;
a number of measurement instances input to the AI model;
a number of prediction instances output from the AI model; or
a moving speed of an applicable terminal.

4. The method of any one of claims 1-3, wherein the first information comprises at least one of:
capability information indicating an AI functionality and/or an AI model supported by the terminal; or
certification information indicating a certification of the AI functionality and/or the AI model.

5. The method of any one of claims 1-4, wherein the performance comprises at least one of the following types:
a beam or beam pair prediction accuracy;
a beam or beam pair prediction accuracy under a layer 1 reference signal received power (L1-RSRP) difference being within a first threshold, wherein the L1-RSRP difference is a difference between a measured L1-RSRP of a predicted best beam or beam pair and a measured L1-RSRP of a measured best beam or beam pair;
an L1-RSRP differential metric, wherein the L1-RSRP differential metric is a differential metric between a measured L1-RSRP of a predicted best beam or beam pair and a measured L1-RSRP of a measured best beam or beam pair; the L1-RSRP differential metric comprises at least one of: an average value of L1-RSRP differences, an accumulative distribution function of L1-RSRP differences, a ratio of L1-RSRP differences being less than or equal to a second threshold or a ratio of L1-RSRP differences being greater than a third threshold; and the L1-RSRP difference is a difference between the measured L1-RSRP of the predicted best beam or beam pair and the measured L1-RSRP of the measured best beam or beam pair;
a predicted L1-RSRP differential metric, wherein the predicted L1-RSRP differential metric is a differential metric between a predicted L1-RSRP of a predicted best beam or beam pair and a measured L1-RSRP of the predicted best beam or beam pair; the predicted L1-RSRP differential metric comprises at least one of: an average value of predicted L1-RSRP differences, an accumulative distribution function of predicted L1-RSRP differences, a ratio of predicted L1-RSRP differences being less than or equal to a fourth threshold or a ratio of predicted L1-RSRP differences being greater than a fifth threshold; and a predicted L1-RSRP difference is a difference between the predicted L1-RSRP of the predicted best beam or beam pair and the measured L1-RSRP of the predicted best beam or beam pair;
a throughput of the terminal;
a reference signal overhead;
an uplink control information overhead; or
a prediction delay.

6. The method of any one of claims 1-5, wherein in response to performing a certification of the AI functionality and/or the AI model, sending, by the terminal, the first information to the network device.

7. The method of claim 6, wherein in response to performing the certification of the AI functionality, the performance of the AI functionality comprises at least one of:
one or more performance values; or
a range of a performance value.

8. The method of claim 7, wherein the AI functionality comprises a plurality of AI models,
a performance value is a first performance value among performance values corresponding to the plurality of AI models, and the first performance value is a maximum value or a minimum value.

9. The method of claim 7, wherein the AI functionality comprises a plurality of AI models,
a plurality of performance values are respective performance values corresponding to the plurality of AI models.

10. The method of claim 7, wherein the AI functionality comprises a plurality of AI models,
the range of the performance value is a range of performance values corresponding to the plurality of AI models.

11. The method of claim 6 or 7, wherein the performance comprises different types of performance,
the performance of the AI functionality or the AI model satisfies at least one of:
the AI functionality or the AI model is used for spatial domain beam prediction, and each of the different types of performance corresponds to a performance value; or
the AI functionality or the AI model is used for time domain beam prediction, and each of the different types of performance corresponds to one or more performance values comprising performance values corresponding to each prediction instance.

12. A communication method, comprising:
receiving, by a network device, first information sent by a terminal, wherein the first information comprises a performance of an artificial intelligence (AI) functionality or an AI model, and the AI functionality or the AI model is deployed at the terminal side.

13. The method of claim 12, wherein the first information further comprises at least one of:
an identifier of an AI functionality or an AI model supported by the terminal; or
a condition for an AI functionality or an AI model supported by the terminal.

14. The method of claim 13, wherein the condition comprises at least one of:
a number of beams or beam pairs in a first beam set, wherein a measurement value of the first beam set is used as an input to the AI model;
a beam pattern of a beam or beam pair in a first beam set;
a number of beams or beam pairs in a second beam set, wherein an output of the AI model is used to obtain beam information in the second beam set;
a beam pattern of a beam or beam pair in a second beam set;
a relationship between a first beam set and a second beam set;
a content input to the AI model;
a content output from the AI model;
monitoring information on the performance of the AI functionality or the AI model ;
assistance information;
an applicable deployment scenario;
a beam codebook for an applicable network device;
a beam codebook for an applicable terminal ;
distribution information of an applicable terminal;
a number of measurement instances input to the AI model;
a number of prediction instances output from the AI model; or
a moving speed of an applicable terminal .

15. The method of any one of claims 12-14, wherein the first information comprises at least one of:
capability information indicating an AI functionality and/or AI model supported by the terminal; or
certification information indicating a certification of the AI functionality and/or the AI model.

16. The method of any one of claims 12-15, wherein the performance comprises at least one of the following types:
a beam or beam pair prediction accuracy;
a beam or beam pair prediction accuracy under a layer 1 reference signal received power (L1-RSRP) difference being within a first threshold, wherein the L1-RSRP difference is a difference between a measured L1-RSRP of a predicted best beam or beam pair and a measured L1-RSRP of a measured best beam or beam pair;
an L1-RSRP differential metric, wherein the L1-RSRP differential metric is a differential metric between a measured L1-RSRP of a predicted best beam or beam pair and a measured L1-RSRP of a measured best beam or beam pair; the L1-RSRP differential metric comprises at least one of: an average value of L1-RSRP differences, an accumulative distribution function of L1-RSRP differences, a ratio of L1-RSRP differences being less than or equal to a second threshold or a ratio of L1-RSRP differences being greater than a third threshold; and a L1-RSRP difference is a difference between the measured L1-RSRP of the predicted best beam or beam pair and the measured L1-RSRP of the measured best beam or beam pair;
a predicted L1-RSRP differential metric, wherein the predicted L1-RSRP differential metric indicator is a differential metric between a predicted L1-RSRP of a predicted best beam or beam pair and a measured L1-RSRP of the predicted best beam or beam pair; the predicted L1-RSRP differential metric comprises at least one of: an average value of predicted L1-RSRP differences, an accumulative distribution function of predicted L1-RSRP differences, a ratio of predicted L1-RSRP differences being less than or equal to a fourth threshold or a ratio of predicted L1-RSRP differences being greater than a fifth threshold; and a predicted L1-RSRP difference is a difference between the predicted L1-RSRP of the predicted best beam or beam pair and the measured L1-RSRP of the predicted best beam or beam pair;
a throughput of the terminal ;
a reference signal overhead;
an uplink control information overhead; or
a prediction delay.

17. The method of any one of claims 12-16, wherein in response to performing a certification of the AI functionality and/or the AI model, receiving by the network device the first information sent by the terminal.

18. The method of claim 17, wherein in response to performing the certification of the AI functionality, the performance of the AI functionality comprises at least one of:
one or more performance values; or
a range of a performance value.

19. The method of claim 18, wherein the AI functionality comprises a plurality of AI models,
a performance value is a first performance value among performance values corresponding to the plurality of AI models, and the first performance value is a maximum value or a minimum value.

20. The method of claim 18, wherein the AI functionality comprises a plurality of AI models,
a plurality of performance values are respective performance values corresponding to the plurality of AI models.

21. The method of claim 18, wherein the AI functionality comprises a plurality of AI models,
the range of the performance value is a range of performance values corresponding to the plurality of AI models.

22. The method of claim 17 or 18, wherein the performance comprises different types of performance,
the performance of the AI functionality or the AI model satisfies at least one of:
the AI functionality or the AI model is used for spatial domain beam prediction, and each of the different types of performance corresponds to a performance value; or
the AI functionality or the AI model is used for time domain beam prediction, and each of the different types performance corresponds to one or more performance values comprising performance values corresponding to each prediction instance.

23. A communication method, comprising:
sending, by a terminal, first information to a network device, wherein the first information comprises performance of an artificial intelligence (AI) functionality or an AI model, and the AI functionality or the AI model is deployed at the terminal side; and
receiving, by the network device, the first information.

24. A terminal, comprising:
a transceiver module, configured to send first information to a network device, wherein the first information comprises performance of an artificial intelligence (AI) functionality or an AI model, and the AI functionality or the AI model is deployed at the terminal side.

25. A network device, comprising:
a transceiver module, configured to receive first information sent by a terminal, wherein the first information comprises performance of an artificial intelligence (AI) functionality or an AI model, and the AI functionality or the AI model is deployed at the terminal side.

26. A terminal, comprising:
one or more processors;
wherein the processor is used for implementing the communication method of any one of claims 1-11.

27. A network device, comprising:
one or more processors;
wherein the processor is used for implementing the communication method of any one of claims 12-22.

28. A communication system, comprising a terminal and a network device, wherein the terminal is used for implementing the communication method of any one of claims 1-11, and the network device is used for implementing the communication method of any one of claims 12-22.

29. A storage medium, wherein the storage medium stores instructions, and when the instructions are executed by a communication device, the communication device is caused to implement the communication method of any one of claims 1-11 or the communication method of any one of claims 12-22.
